# EUROPEAN PATENT APPLICATION

(11) **EP 4 671 094 A1**
(43) Date of publication of application: **31.12.2025**
(21) Application number: 23930969.3
(22) Date of filing: 27.12.2023
(51) Int. Cl.: B62D 25/20, B60K 1/04

(54) **VEHICLE BODY LOWER STRUCTURE OF ELECTRIC VEHICLE**

(30) Priority: 28.03.2023 JP 2023050998; 28.03.2023 JP 2023051029; 28.03.2023 JP 2023051033; 18.07.2023 JP 2023116394
(71) Applicant: JFE STEEL CORPORATION, Tokyo 100-0011 (JP)
(72) Inventor: SAITO, Takanobu, Tokyo 100-0011 (JP)
(74) Representative: Hoffmann Eitle
(86) International application number: PCT/JP2023/047010
(87) International publication number: WO 2024/202355

(57) **Abstract**

An automotive body lower structure 1 of a battery electric vehicle according to the present invention includes: a pair of right and left side sills 10 disposed on an outer side of the vehicle in an automotive body width direction and extending in an automotive body front-rear direction; a battery pack 20 disposed between the side sills 10; a floor cross member 30 installed on an upper surface side of the battery pack 20 and extending in the vehicle width direction; and a ground-side cross member 40 installed on a lower surface side of the battery pack 20 and having a groove shape extending in the vehicle width direction, in which the floor cross member 30 has a linear groove shape opened toward the automotive body lower side with both ends 30a being closed, and both the ends 30a abut on top portions 11a of side sill inners 11, which are side surfaces of the side sills 10, and the ground-side cross member 40 has ends 40a connected to the side wall portions 11b of the side sill inners 11, which are lower surfaces of the side sills 10.

## Description

### Field

The present invention relates to an automotive body lower structure of a battery electric vehicle in which a battery pack is disposed on a floor portion of an automotive body lower portion.

### Background

In recent years, particularly in the automobile industry, gasoline engine cars have been replaced with battery electric vehicles and the like in view of environmental problems. In a battery electric vehicle and the like, a battery pack is disposed on a floor portion of an automotive body lower portion. The battery pack accommodates a large battery. Then, the battery is often formed of a Li-based material. A risk of fire may occur if the battery pack is damaged at the time of impact and liquid leaks from the battery. A structure for protecting the battery pack is thus necessary.

In general, a battery electric vehicle and the like have a structure in which a battery pack is surrounded by a pair of right and left side sills and a floor cross member. The pair of right and left side sills are disposed on both sides of the automotive body. The floor cross member is provided above a battery pack, and connected to the right and left side sills. Then, it is important that, at the time of side impact, a side sill and the like are deformed by an impact load input to a side surface of a vehicle and impact energy is absorbed to reduce a load input to a battery pack and inhibit deformation of the battery pack. Therefore, structures for protecting a battery pack at the time of side impact have been proposed as disclosed in, for example, Patent Literatures 1 to 7.

### Citation List

### Patent Literature

Patent Literature 1: JP 2020-83033 A
Patent Literature 2: Japanese Patent No. 6889419
Patent Literature 3: JP 2020-189567 A
Patent Literature 4: JP 2021-88364 A
Patent Literature 5: JP 2022-77194 A
Patent Literature 6: Japanese Patent No. 6734709
Patent Literature 7: Japanese Patent No. 6887469

### Summary

### Technical Problem

In structures of Patent Literatures 1 to 3, a flange portion formed at an end of a floor cross member (cross member in Patent Literature 2 and first and second cross members in Patent Literature 3) having a hat-shaped cross section is connected to a side surface of a side sill (rocker in Patent Literature 1). In these structures, however, the floor cross member having a hat-shaped cross section is easily deformed to be opened by an impact load input at the time of side impact, which prevents impact energy from being sufficiently absorbed.

Furthermore, a structure of Patent Literature 4 includes a side sill (rocker in Patent Literature 4) in which an outer portion and an inner portion are integrally formed. The inner portion has a different cross-sectional shape of L taken along an automotive body width direction. Therefore, it is difficult to manufacture a side sill having such a cross-sectional shape by press forming. There have arisen problems of a deterioration in productivity and an increase in manufacturing cost. In addition, the structure of Patent Literature 4 includes a ladder-shaped shock absorption portion (crashworthiness energy absorption part) integrally formed in a side sill for absorbing impact energy input at the time of side impact, which increases automotive body weight.

Moreover, in structures of Patent Literatures 5 to 7, an end of a floor cross member is located above a side sill. This prevents the side sill from being sufficiently crushed by reaction force of an impact load transmitted to the floor cross member at the time of side impact, and prevents impact energy from being sufficiently absorbed.

As described above, conventional structures for protecting a battery pack at the time of side impact cannot sufficiently absorb impact energy, which causes such a problem that a load input to the battery pack cannot be reduced and deformation cannot be inhibited. Moreover, a shock absorption portion (crashworthiness energy absorption part) is required to be separately provided in order to sufficiently absorb impact energy, which increases automotive body weight.

The present invention has been made to solve the above-described problems, and an object thereof is to provide an automotive body lower structure of a battery electric vehicle capable of reducing a load input to a battery pack and inhibiting deformation without deteriorating weight efficiency at the time of side impact of the battery electric vehicle.

### Solution to Problem

An automotive body lower structure of a battery electric vehicle according to a first aspect of the present invention includes: a pair of right and left side sills disposed on an outer side of the vehicle in an automotive body width direction and extending in an automotive body front-rear direction; a battery pack disposed between the pair of right and left side sills; a floor cross member installed on an upper surface side of the battery pack and extending in the automotive body width direction; and a ground-side cross member installed on a lower surface side of the battery pack and having a groove shape extending in the automotive body width direction, wherein the floor cross member has a linear groove shape opened toward the automotive body lower side with both ends being closed, and both the ends abut on side surfaces of the right and left side sills, and the ground-side cross member has the groove shape that is linear and a cross-sectional shape orthogonal to the automotive body width direction substantially constant along the automotive body width direction, and has an end connected to a lower surface of each of the side sills.

An automotive body lower structure of a battery electric vehicle according to a second aspect of the present invention includes: a pair of right and left side sills disposed on an outer side of the vehicle in an automotive body width direction and extending in an automotive body front-rear direction; a battery pack disposed between the pair of right and left side sills; a floor cross member installed on an upper surface side of the battery pack and extending in the automotive body width direction; and a pair of right and left ground-side cross members installed on both ends in the automotive body width direction on a lower surface of the battery pack and having a groove shape extending from both the ends toward the outer side of the vehicle, wherein the floor cross member has a linear groove shape opened toward an automotive body lower side with both ends being closed, and both the ends abut on side surfaces of the right and left side sills, and each of the ground-side cross members has the groove shape that is linear and a cross-sectional shape orthogonal to the automotive body width direction substantially constant along the automotive body width direction, has an end, on an inner side of the vehicle, connected to a lower surface of the battery pack, and has an end, on the outer side of the vehicle, connected to a lower surface of each of the side sills.

An automotive body lower structure of a battery electric vehicle according to a third aspect of the present invention includes: a pair of right and left side sills disposed on an outer side of the vehicle in an automotive body width direction and extending in an automotive body front-rear direction; a battery pack disposed between the pair of right and left side sills; a floor cross member installed on an upper surface side of the battery pack and extending in the automotive body width direction; and a ground-side cross member installed on a lower surface side of the battery pack and having a groove shape extending in the automotive body width direction, wherein the floor cross member has a linear groove shape opened toward the automotive body lower side with both ends being closed, and both the ends abut on side surfaces of the right and left side sills, and the ground-side cross member has a groove height made higher toward an end on the outer side of the vehicle than the battery pack, and has the end connected to a lower surface of each of the side sills.

An automotive body lower structure of a battery electric vehicle according to a fourth aspect of the present invention includes: a pair of right and left side sills disposed on an outer side of the vehicle in an automotive body width direction and extending in an automotive body front-rear direction; a battery pack disposed between the pair of right and left side sills; a floor cross member installed on an upper surface side of the battery pack and extending in the automotive body width direction; and a pair of right and left ground-side cross members installed on both ends in the automotive body width direction on a lower surface of the battery pack and having a groove shape extending from both the ends toward the outer side of the vehicle, wherein the floor cross member has a linear groove shape opened toward an automotive body lower side with both ends being closed, and both the ends abut on side surfaces of the right and left side sills, and each of the ground-side cross members has an end, on an inner side of the vehicle, connected to a lower surface of the battery pack, has a groove height increased toward an end on an outer side of the vehicle than the battery pack, and has an end, on the outer side of the vehicle, connected to a lower surface of each of the side sills.

The ground-side cross member may include: a continuous hat-shaped cross section member having at least three continuous hat-shaped cross sections in a cross section orthogonal to an automotive body width direction;
an upper metal sheet that covers an upper surface of the continuous hat-shaped cross section member; and a lower metal sheet that covers a lower surface of the continuous hat-shaped cross section member.

A closed shape of the floor cross member may be formed by welding or bonding an end plate at both the ends of the groove shape.

The floor cross member may have a cross-sectional shape orthogonal to the automotive body width direction substantially constant along the automotive body width direction.

Each of the side sills and the floor cross member may be formed of a steel sheet having a tensile strength of 980 MPa class or more, and the ground-side cross member may be made of a steel sheet having a tensile strength of 590 MPa class or more.

### Advantageous Effects of Invention

In the present invention, damage of a battery can be inhibited by reducing a load input to a battery pack and inhibiting intrusion of a side sill to the battery pack at the time of side impact. This can manufacture a safe battery electric vehicle that protects a battery pack at the time of side impact. Moreover, in the present invention, a cross-sectional height of a side sill can be reduced. The weight of the automotive body can be reduced without deteriorating crashworthiness for side impact. Moreover, in the present invention, the weight of the automotive body can be reduced without deteriorating crashworthiness for side impact by installing a pair of right and left ground-side cross members at both ends in an automotive body width direction on the lower surface side of the battery pack and reducing the cross-sectional height of the side sill.

### Brief Description of Drawings

[FIG. 1] FIG. 1 is a cross-sectional view illustrating a configuration of an automotive body lower structure of a battery electric vehicle according to a first embodiment of the present invention.
[FIG. 2] FIG. 2 illustrates an example of a ground-side cross member in the automotive body lower structure of the battery electric vehicle according to the first embodiment of the present invention ((a) cross-sectional view orthogonal to automotive body front-rear direction, (b) cross-sectional view orthogonal to automotive body width direction).
[FIG. 3] FIG. 3 is a cross-sectional view illustrating a configuration of an automotive body lower structure of a battery electric vehicle according to a second embodiment of the present invention.
[FIG. 4] FIG. 4 illustrates ground-side cross members in the automotive body lower structure of the battery electric vehicle according to the second embodiment of the present invention ((a) cross-sectional view orthogonal to automotive body front-rear direction, (b) cross-sectional view orthogonal to automotive body width direction).
[FIG. 5] FIG. 5 is a cross-sectional view illustrating a configuration of an automotive body lower structure of a battery electric vehicle according to a third embodiment of the present invention.
[FIG. 6] FIG. 6 illustrates an example of a ground-side cross member in the automotive body lower structure of the battery electric vehicle according to the third embodiment of the present invention.
[FIG. 7] FIG. 7 is a cross-sectional view illustrating a configuration of an automotive body lower structure of a battery electric vehicle according to a fourth embodiment of the present invention.
[FIG. 8] FIG. 8 illustrates an example of ground-side cross members in the automotive body lower structure of the battery electric vehicle according to the fourth embodiment of the present invention.
[FIG. 9] FIG. 9 illustrates a side impact pole test in Examples 1 to 4.
[FIG. 10] FIG. 10 contains perspective views illustrating an automotive body lower structure set as a target of the side impact pole test in Example 1 ((a) perspective view from above automotive body, (b) perspective view from below automotive body).
[FIG. 11] FIG. 11 contains cross-sectional views illustrating configurations of ground-side cross members in an automotive body lower structure according to an invention example in the example ((a) battery pack and ground-side cross members, (b) ground-side cross member).
[FIG. 12] FIG. 12 illustrates positions in an automotive body front-rear direction (TL) where a pole collides with a side surface of a vehicle in the side impact pole test in Examples 1 to 4 ((a) TL = 520 mm (No. 1), (b) TL = 905 mm (No. 2), (c) TL = 1080 mm (No. 3), (d) TL = 1260 mm (No. 4), and (e) TL = 1605 mm (No. 5)).
[FIG. 13] FIG. 13 illustrates evaluation items in the side impact pole test in Example 1 ((a) input load to battery pack, (b) deformation amount of battery pack).
[FIG. 14] FIG. 14 illustrates states of deformation of the automotive body lower structure according to the invention example in the side impact pole test in Example 1 ((a) plan view from below automotive body, (b) cross-sectional view of automotive body lower structure at time of impact start, (c) cross-sectional view of automotive body lower structure after impact).
[FIG. 15] FIG. 15 contains graphs illustrating results of evaluation items obtained in the side impact pole test in the example ((a) input load to battery pack, (b) deformation amount of battery pack).
[FIG. 16] FIG. 16 illustrates an automotive body lower structure set as a target of analysis in the side impact pole test in Example 2 ((a) perspective view from above automotive body, (b) plan view from below automotive body).
[FIG. 17] FIG. 17 illustrates ground-side cross members in the automotive body lower structure of the battery electric vehicle in Example 2 ((a) cross section orthogonal to automotive body width direction of battery pack and ground-side cross members, (b) cross section orthogonal to automotive body width direction of ground-side cross member).
[FIG. 18] FIG. 18 illustrates, in Example 2, (a) lengths of a ground-side cross member in an automotive body lower structure according to Invention Example 2 and (b) a ground-side cross member in an automotive body lower structure according to Reference Example 2.
[FIG. 19] FIG. 19 illustrates, in Example 2, states of deformation in a side impact process of a vehicle including the automotive body lower structure according to Invention Example 2 ((a) plan view from below automotive body, (b) cross-sectional view of automotive body lower structure at time of impact start, (c) cross-sectional view of automotive body lower structure after impact).
[FIG. 20] FIG. 20 illustrates states of deformation in a side impact process of a vehicle including an automotive body lower structure including a ground-side cross member having a different length in Example 2 ((a) length of ground-side cross member: 245 mm, (b) length of ground-side cross member: 165 mm).
[FIG. 21] FIG. 21 contains graphs illustrating results of evaluation items obtained in the side impact pole test in Example 2 ((a) input load to battery pack, (b) deformation amount of battery pack).
[FIG. 22] FIG. 22 contains perspective views illustrating an automotive body lower structure set as a target of the side impact pole test in Example 3 ((a) perspective view from above automotive body, (b) perspective view from below automotive body).
[FIG. 23] FIG. 23 illustrates an automotive body lower structure of a battery electric vehicle set as an analysis target of a side impact process in Example 3 ((a) perspective view obtained by enlarging ends of floor cross member and ground-side cross member, (b) cross-sectional view of automotive body lower structure at position of floor cross member on automotive body front side, (c) cross-sectional view of automotive body lower structure at position of floor cross member on automotive body rear side).
[FIG. 24] FIG. 24 illustrates, in Example 3, ground-side cross members in the automotive body lower structure according to Invention Example 3 ((a) cross-sectional view of battery pack and ground-side cross members, (b) cross-sectional view of ground-side cross member at center in automotive body width direction, (c) cross-sectional view of ground-side cross member at end in automotive body width direction).
[FIG. 25] FIG. 25 illustrates widths of a battery cell in Example 3 ((a) reference width, (b) made 30 mm larger toward the outer side of the vehicle in automotive body width direction than reference width).
[FIG. 26] FIG. 26 illustrates states of deformation of the automotive body lower structure according to Invention Example 3 in the side impact pole test in Example 3 ((a) plan view from below automotive body, (b) cross-sectional view of automotive body lower structure at time of impact start, (c) cross-sectional view of automotive body lower structure after impact).
[FIG. 27] FIG. 27 contains graphs illustrating results of evaluation items obtained in the side impact pole test in Example 3 ((a) input load to battery pack, (b) deformation amount of battery pack).
[FIG. 28] FIG. 28 contains perspective views illustrating an automotive body lower structure set as a target of analysis in the side impact pole test in Example 4 ((a) perspective view from above automotive body, (b) perspective view from below automotive body).
[FIG. 29] FIG. 29 illustrates, in Example 4, lengths of a ground-side cross member in an automotive body lower structure according to Invention Example 5 and a ground-side cross member in an automotive body lower structure according to the reference example.
[FIG. 30] FIG. 30 illustrates, in Example 4, states of deformation in a side impact process of a vehicle including the automotive body lower structure according to Invention Example 5 ((a) plan view from below automotive body, (b) cross-sectional view of automotive body lower structure at time of impact start, (c) cross-sectional view of automotive body lower structure after impact).
[FIG. 31] FIG. 31 illustrates states of deformation in a side impact process of a vehicle including an automotive body lower structure including a ground-side cross member having a different length in Example 4 ((a) length of ground-side cross member: 165 mm, (b) length of ground-side cross member: 85 mm).
[FIG. 32] FIG. 32 contains graphs illustrating results of evaluation items obtained in the side impact pole test in Example 4 ((a) input load to battery pack, (b) deformation amount of battery pack).

### Description of Embodiments

### [First Embodiment]

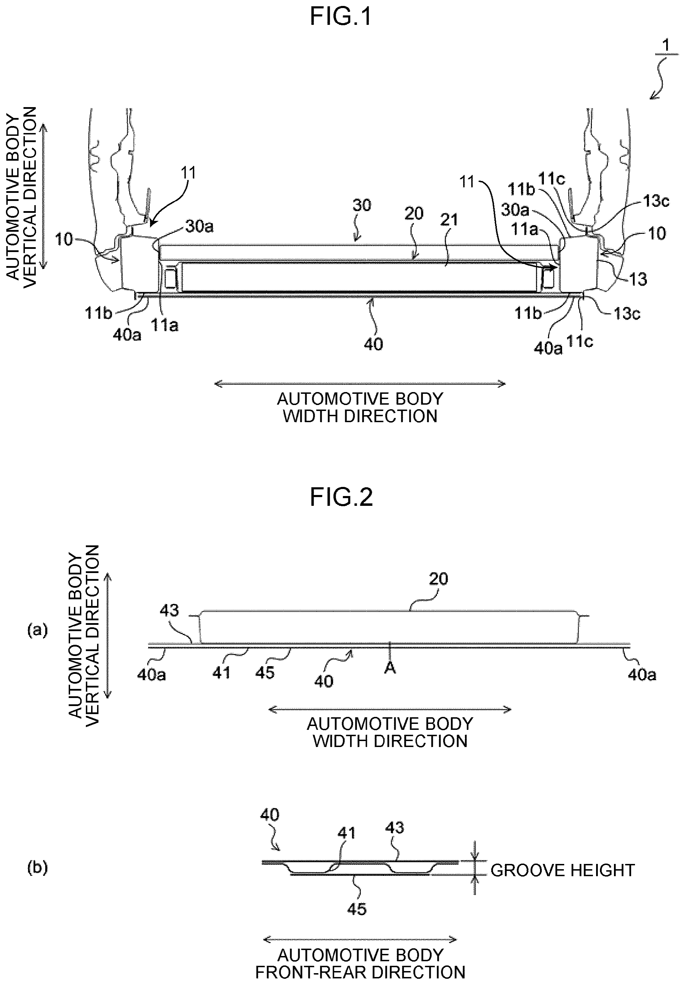

As illustrated in FIG. 1 as an example, an automotive body lower structure 1 of a battery electric vehicle (hereinafter, simply referred to as "automotive body lower structure 1") according to a first embodiment of the present invention includes side sills 10, a battery pack 20, a floor cross member 30, and a ground-side cross member 40. The automotive body lower structure 1 according to the first embodiment will be described below with reference to FIGS. 1 and 2. In the present specification and the drawings, the same reference signs are attached to elements having the same functional configurations to omit redundant description thereof.

### <Side Sill>

A pair of right and left side sills 10 are disposed on an outer side of the vehicle in an automotive body width direction, and extend in an automotive body front-rear direction. As illustrated in FIG. 1, a side sill 10 includes a side sill inner 11 and a side sill outer 13.

The side sill inner 11 has a hat-shaped cross section opened toward an outer side of the vehicle in a vehicle width direction. The side sill inner 11 includes a top portion 11a, a pair of side wall portions 11b, and flange portions 11c. The pair of side wall portions 11b extend from the upper side and the lower side of the top portion 11a. The flange portions 11c extend from the side wall portions 11b.

The side sill outer 13 has a hat-shaped cross section opened toward the inner side of the vehicle in the automotive body width direction. The side sill outer 13 includes flange portions 13c at ends on an automotive body upper side and an automotive body lower side.

In the side sill 10, a flange portion 11c of the side sill inner 11 and a flange portion 13c of the side sill outer 13 are joined together on the automotive body upper side. A flange portion 11c of the side sill inner 11 and a flange portion 13c of the side sill outer 13 are joined together on the automotive body lower side. This causes the side sill 10 to have a closed cross section structure formed by the side sill inner 11 and the side sill outer 13.

### <Battery Pack>

As illustrated in FIG. 1, the battery pack 20 is disposed between the pair of right and left side sills 10. A battery cell 21 is mounted in the battery pack 20. In the first embodiment, battery frames 23 disposed on outer peripheral sides in the vehicle width direction support the battery pack 20.

### <Floor Cross Member>

As illustrated in FIG. 1, the floor cross member 30 is installed on the upper surface side of the battery pack 20, and extends in the automotive body width direction. Then, the floor cross member 30 has a linear groove shape opened toward the automotive body lower side with both ends 30a in the automotive body width direction being closed. The ends 30a abut on the side surfaces of the side sills 10. In the automotive body lower structure 1 in FIG. 1, both the ends 30a of the floor cross member 30 abut on the top portions 11a of the side sill inners 11, which are side surfaces of the side sills 10. In order to improve automotive body stiffness, both the ends of the floor cross member 30 and the top portions 11a of the side sill inners 11 may be joined together by brackets or the like.

### <Ground-Side Cross Member>

As illustrated in FIG. 1, the ground-side cross member 40 is installed on the lower surface side of the battery pack 20, and has a groove shape extending in the automotive body width direction. Then, the ground-side cross member 40 has a cross-sectional shape orthogonal to the automotive body width direction substantially constant along the automotive body width direction. The ground-side cross member 40 has ends 40a connected to the lower surfaces (side wall portions 11b on lower sides of side sill inners 11) of the side sills 10.

A method of connecting the ends 40a of the ground-side cross member 40 and the lower surfaces of the side sills 10 together is not particularly limited. For example, the upper surfaces (upper metal sheet 43 in FIG. 2(b)) of the ends 40a of the ground-side cross member 40 and the side wall portions 11b on the lower side of the side sill inners 11 can be fastened together with fixing bolts, or can be connected together by welding. Furthermore, a predetermined interval can be secured between the ends 40a of the ground-side cross member 40 and the flange portions 11c on the automotive body lower side of the side sill inners 11. This is to prevent a load transfer path for an impact load input to the automotive body from being formed in the ground-side cross member 40 before a side sill outer 13 is crushed at the time of side impact.

The reason why deformation can be inhibited by reducing a load input to the battery pack 20 to protect the battery cell 21 in the automotive body lower structure 1 according to the first embodiment will be described below.

In the automotive body lower structure 1, the floor cross member 30 has a groove shape with both the ends 30a being closed. The floor cross member 30 abuts on the side surfaces (top portions 11a of side sill inners 11) of the right and left side sills 10. This can inhibit a reduction in crashworthiness caused by shape collapse such as opening of the groove shape of an end 30a even if a side sill 10 is deformed at the time of side impact and a load is input to the end 30a of the floor cross member 30.

Furthermore, the ground-side cross member 40 installed on the lower surface side of the battery pack 20 can disperse and transmit a load input to a side surface of the automotive body lower structure 1 to the floor cross member 30 and the ground-side cross member 40. This can improve the performance of protecting the battery pack 20 more effectively.

As described above, the automotive body lower structure 1 of the battery electric vehicle according to the first embodiment can reduce a load input to the battery pack 20 at the time of side impact, and inhibit deformation of the battery pack 20. This can manufacture a safe battery electric vehicle that protects a battery even at the time of side impact.

In the present invention, the ground-side cross member 40 preferably has a groove shape extending in the automotive body width direction and includes a continuous hat-shaped cross section member 41, the upper metal sheet 43, and a lower metal sheet 45 as illustrated in FIG. 2.

The continuous hat-shaped cross section member 41 has three continuous hat-shaped cross sections in a cross section orthogonal to the automotive body width direction as illustrated in FIG. 2(b). The continuous hat-shaped cross section member 41 has two hat-shaped cross sections opened toward the automotive body upper side and one hat-shaped cross section opened toward the automotive body lower side between the two hat-shaped cross sections. These hat-shaped cross sections are continuous along the automotive body front-rear direction.

The upper metal sheet 43 covers the upper surface of the continuous hat-shaped cross section member 41. The upper metal sheet 43 closes the openings of the two hat-shaped cross sections opened toward the automotive body upper side in the continuous hat-shaped cross section member 41 as illustrated in FIG. 2(b). The upper metal sheet 43 and the continuous hat-shaped cross section member 41 can be connected together by one-sided welding or bolts.

The lower metal sheet 45 covers the lower surface of the continuous hat-shaped cross section member 41. The lower metal sheet 45 closes top portions on the automotive body lower side of the two hat-shaped cross sections opened toward the automotive body upper side in the continuous hat-shaped cross section member 41 as illustrated in FIG. 2(b). The lower metal sheet 45 and the continuous hat-shaped cross section member 41 can be connected together by one-sided welding or bolts.

The continuous hat-shaped cross section member 41 sandwiched between the upper metal sheet 43 and the lower metal sheet 45 as described above can enhance bending stiffness against a side impact load, and inhibit deformation of the ground-side cross member 40. This enables the lower side of the side sill 10 to be sufficiently crushed at the time of side impact to absorb impact energy.

Furthermore, although the continuous hat-shaped cross section member 41 in FIG. 2(b) has three continuous hat-shaped cross sections, the continuous hat-shaped cross section member is only required to have at least three continuous hat-shaped cross sections in the present invention.

In the present invention, the continuous hat-shaped cross section member has two outside hat-shaped cross sections with openings facing the automotive body lower side and a middle hat-shaped cross section with an opening facing the automotive body upper side. In this case, the upper metal sheet is required to cover the upper surface of the continuous hat-shaped cross section member by connecting the top portions of the two outside hat-shaped cross sections of the continuous hat-shaped cross section member. Moreover, the lower metal sheet is required to cover the lower surface of the continuous hat-shaped cross section member by closing the opening of the middle hat-shaped cross section of continuous hat-shaped cross section member.

In the present invention, the floor cross member is only required to have a groove shape extending in the automotive body width direction with both ends being closed. A shape in which an end plate is closed by welding or bonding at both the ends of the groove shape is preferably formed. The end plates may be welded by any of spot welding, laser beam welding, and electric arc welding.

The floor cross member, however, may be integrally formed by drawing the linear groove shape and a shape with both the ends being closed.

Moreover, in the present invention, the floor cross member preferably has a linear groove shape with no curved undulations in a vehicle width direction, and has a cross-sectional shape orthogonal to the automotive body width direction substantially constant along the automotive body width direction. The substantially constant cross-sectional shape can mean a change in groove heights of the cross-sectional shape in the automotive body width direction within ±10% to an average value of the groove heights in the automotive body width direction of the floor cross member.

The floor cross member having a linear cross-sectional shape, with no curved undulations in the automotive body width direction, substantially constant along the automotive body width direction as described above can have a structure in which the floor cross member is not easily subject to folding deformation (buckling deformation) at the time of side impact. This enables the upper side of the side sill to be sufficiently crushed, and can gain high impact absorption energy. Furthermore, similarly to the floor cross member, the ground-side cross member preferably has a linear groove shape having a cross-sectional shape orthogonal to the automotive body width direction substantially constant along the automotive body width direction. A change in the cross-sectional shape in the automotive body width direction is preferably within ±10% to an average value of groove heights in the automotive body width direction of the ground-side cross member.

In the automotive body lower structure according to the present invention, the position and the number of floor cross members can be appropriately set such that an impact load can be received regardless of a position where the impact load is input to the side surface of the battery electric vehicle and the battery pack can be effectively protected.

Furthermore, the position and the number of ground-side cross members are required to be appropriately set similarly to those of the floor cross member. An impact load, however, can be efficiently dispersed to the floor cross member and the ground-side cross member by installing the ground-side cross member at a position where the ground-side cross member overlaps the floor cross member in the automotive body front-rear direction, so that the performance of protecting the battery pack can be further improved.

In the present invention, the side sills and the floor cross member are preferably formed of steel sheets having a tensile strength of 980 MPa class or more. Examples of the steel sheets having a tensile strength of 980 MPa class or more can include steel sheets of 980 MPa class, 1180 MPa class, 1370 MPa class, 1470 MPa class, 1760 MPa class, and 1960 MPa class. Furthermore, the ground-side cross member is preferably formed of a steel sheet having a tensile strength of 590 MPa class or more. Since an end 40a of the ground-side cross member 40 faces a flange portion 11c on the automotive body lower side of a side sill inner 11, an impact load input to the automotive body is directly transmitted to the ground-side cross member 40 after the side sill outer 13 is crushed by side impact (see FIG. 1). The ground-side cross member 40, however, is more easily subject to folding deformation than the floor cross member 30. Fracture generated in the ground-side cross member 40 by folding deformation significantly deteriorates impact energy absorption performance. The ground-side cross member is thus preferably formed of a steel sheet having higher ductility than steel sheets used for the side sill and the floor cross member. The ground-side cross member is preferably formed of a steel sheet of 590 MPa class or more having a lower tensile strength and a higher ductility than a steel sheet used for the floor cross member.

The side sill, the cross member, and the ground-side cross member are formed of steel sheets having these tensile strengths. An upper portion and a lower portion of the side sill are sufficiently crushed at the time of side impact. Impact energy can thus be efficiently absorbed.

### [Second Embodiment]

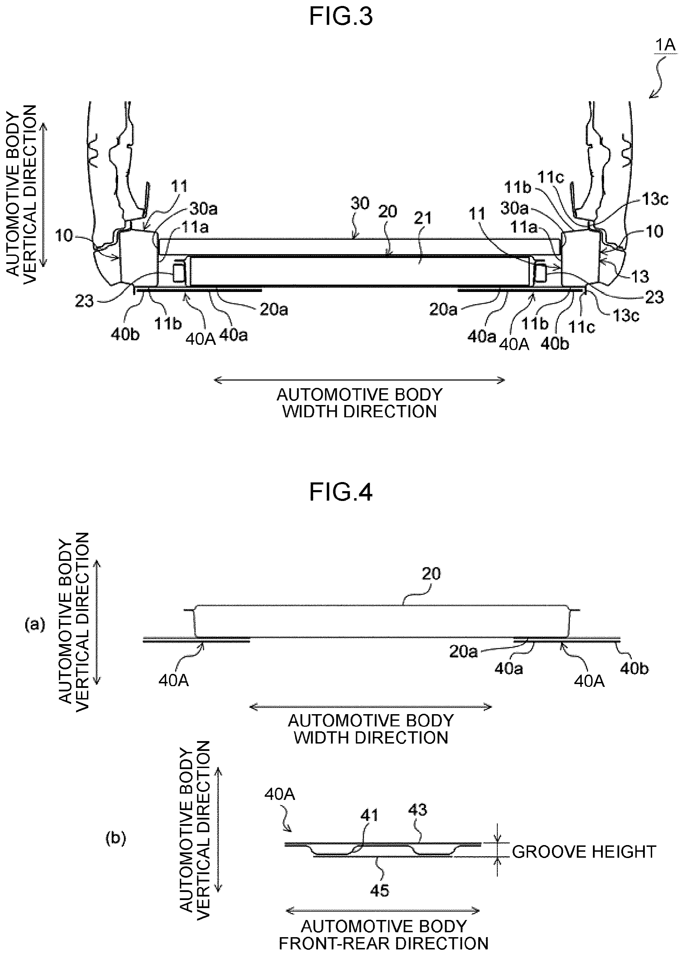

As illustrated in FIG. 3 as an example, an automotive body lower structure 1A of a battery electric vehicle (hereinafter, simply referred to as "automotive body lower structure 1A") according to a second embodiment of the present invention includes side sills 10, a battery pack 20, a floor cross member 30, and ground-side cross members 40A. The automotive body lower structure 1 according to the embodiment will be described below with reference to FIGS. 3 and 4. Since the side sills 10, the battery pack 20, and the floor cross member 30 of the automotive body lower structure 1A according to the second embodiment are similar to those of the first embodiment, the same reference signs are attached to omit descriptions thereof. Furthermore, only differences between the ground-side cross members 40A and the ground-side cross member 40 of the first embodiment will be described, and common description will be omitted.

### <Ground-Side Cross Member>

As illustrated in FIG. 3, a pair of right and left ground-side cross members 40A in the automotive body lower structure 1A are installed at both ends 20a in the automotive body width direction on the lower surface of the battery pack 20, and have groove shapes extending from both the ends 20a to the outer side of the vehicle.

Each of the ground-side cross members 40A in the automotive body lower structure 1A has a groove shape linear along the automotive body width direction, and has a cross-sectional shape orthogonal to the automotive body width direction substantially constant along the automotive body width direction. Furthermore, ends 40a on the inner side of the vehicle are connected to the lower surface of the battery pack 20. Ends 40b on the outer side of the vehicle are connected to the lower surfaces of the side sills 10. In the automotive body lower structure 1A in FIG. 3, the ends 40b on the outer side of the vehicle of the ground-side cross members 40A are connected to side wall portions 11b on the lower sides of side sill inners 11, which are the lower surfaces of the side sills 10.

The pair of right and left ground-side cross members 40A in the automotive body lower structure 1A are separately connected to both the ends 20a in the automotive body width direction on the lower surface side of the battery pack 20. This can prevent a significant increase in automotive body weight caused by installing the ground-side cross members 40A. The ends 40a on the inner side of the vehicle of the ground-side cross members 40A connected to both the ends 20a on the lower surface side of the battery pack 20 can have a range (length) of at least 50 mm or more in the automotive body width direction.

The automotive body lower structure 1A of the battery electric vehicle according to the second embodiment can reduce a load input to the battery pack 20 at the time of side impact, and inhibit deformation of the battery pack 20. This can manufacture a safe battery electric vehicle that protects a battery even at the time of side impact. Moreover, the automotive body lower structure 1A according to the second embodiment can reduce the weight of the automotive body without deteriorating crashworthiness for side impact by installing the pair of right and left ground-side cross members 40A at both the ends 20a in the automotive body width direction on the lower surface of the battery pack 20.

### [Third Embodiment]

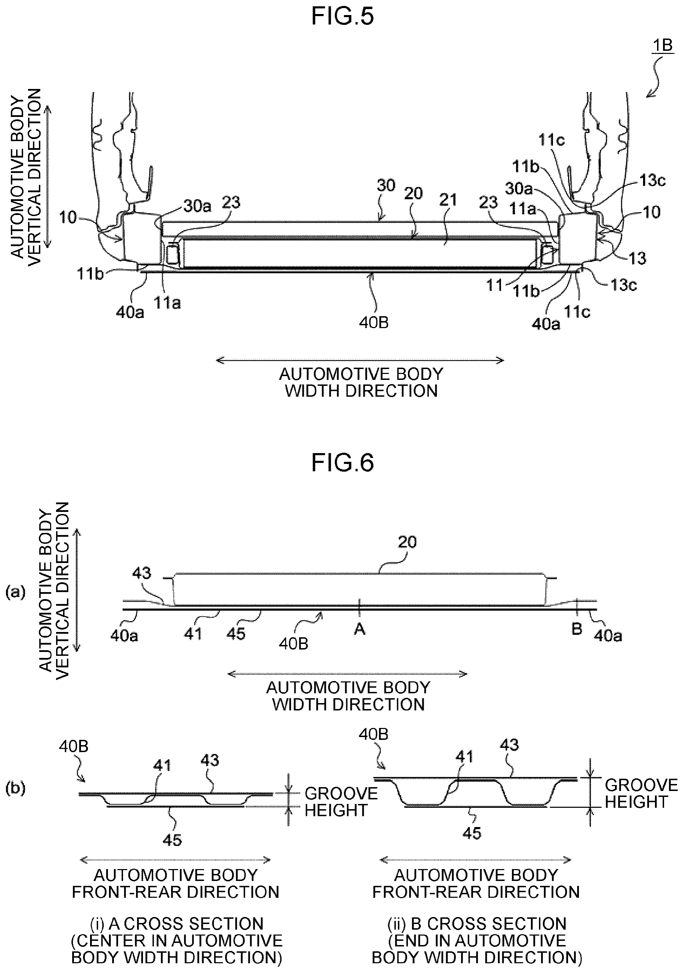

As illustrated in FIG. 5 as an example, an automotive body lower structure 1B of a battery electric vehicle (hereinafter, simply referred to as "automotive body lower structure 1B") according to a third embodiment of the present invention includes side sills 10, a battery pack 20, a floor cross member 30, and a ground-side cross member 40B. The automotive body lower structure 1B according to the third embodiment will be described below with reference to FIGS. 5 and 6. Since the side sills 10, the battery pack 20, and the floor cross member 30 of the automotive body lower structure 1B according to the third embodiment are similar to those of the first embodiment, the same reference signs are attached to omit descriptions thereof. Furthermore, only differences between the ground-side cross member 40B and the ground-side cross member 40 of the first embodiment will be described, and common description will be omitted.

### <Ground-Side Cross Member>

As illustrated in FIG. 5, the ground-side cross member 40B in the automotive body lower structure 1B is installed on the lower surface side of the battery pack 20, and has a groove shape extending in the automotive body width direction. Then, the ground-side cross member 40B has a groove height made higher toward ends 40a on the outer side of the vehicle than the battery pack 20. The ground-side cross member 40B has the ends 40a connected to the lower surfaces (side wall portions 11b on lower sides of side sill inners 11) of the side sills 10. In the embodiment, as illustrated in FIGS. 5 and 6(a), the ground-side cross member 40B is curved along the automotive body width direction on the upper surface side so as to have a groove height continuously increased toward the ends 40a.

In the automotive body lower structure 1B, the cross-sectional heights of the side sills 10 can be reduced by increasing the groove heights of the ends 40a of the ground-side cross member 40B. The weight of the automotive body can be reduced without deteriorating crashworthiness for side impact.

The automotive body lower structure 1B of the battery electric vehicle according to the third embodiment can reduce a load input to the battery pack 20 at the time of side impact, and inhibit deformation of the battery pack 20. This can manufacture a safe battery electric vehicle that protects a battery even at the time of side impact. Moreover, the automotive body lower structure 1B according to the third embodiment can reduce the cross-sectional heights of the side sills, and reduce the weight of the automotive body without deteriorating crashworthiness for side impact.

The ground-side cross member 40 preferably has, at an end 40a, a groove height 1.2 times or more and three times or less higher than the groove height at a central portion in the automotive body width direction, and more preferably twice or less (see FIG. 6(b)). FIG. 6(b) (i) is a cross-sectional view at the center (position of A in FIG. 6(a)) in the automotive body width direction. FIG. 6(b) (i) is a cross-sectional view at an end 40a (position of B in FIG. 6(a)) in the automotive body width direction.

A groove height of less than 1.2 times at the end 40a cannot sufficiently obtain the effect of weight reduction of the automotive body brought by reducing the cross-sectional height of a side sill 10. Furthermore, a groove height exceeding three times at the end 40a easily causes buckling at a portion having a groove height made higher on the outer side of the vehicle than the battery pack 20, and greatly changes the shape. A load input at the time of side impact bends the portion, which prevents the side sill 10 from being sufficiently crushed. Moreover, the side sill 10 has a reduced cross-sectional height, which further deteriorates crashworthiness for side impact.

### [Fourth Embodiment]

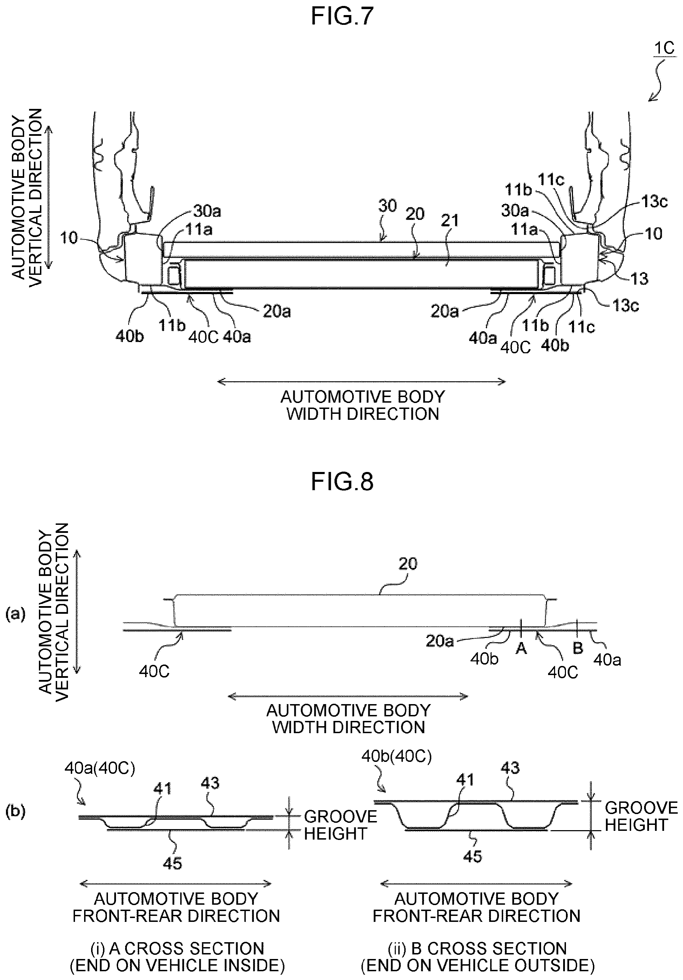

As illustrated in FIG. 7 as an example, an automotive body lower structure 1C of a battery electric vehicle (hereinafter, simply referred to as "automotive body lower structure 1C") according to a fourth embodiment of the present invention includes side sills 10, a battery pack 20, a floor cross member 30, and ground-side cross members 40C. The automotive body lower structure 1C according to the fourth embodiment will be described below with reference to FIGS. 7 and 8. Since the side sills 10, the battery pack 20, and the floor cross member 30 of the automotive body lower structure 1C according to the fourth embodiment are similar to those of the first embodiment, the same reference signs are attached to omit descriptions thereof. Furthermore, only differences between the ground-side cross members 40C and the ground-side cross member 40 of the first embodiment will be described, and common description will be omitted.

### <Ground-Side Cross Member>

As illustrated in FIG. 7, a pair of right and left ground-side cross members 40C in the automotive body lower structure 1C are installed at both ends 20a in the automotive body width direction on the lower surface of the battery pack 20, and have groove shapes extending from both the ends 20a to the outer side of the vehicle.

Each of the ground-side cross members 40C in the automotive body lower structure 1C is connected to the lower surface of the battery pack 20 at an end 40b on the inner side of the vehicle. Moreover, each of the ground-side cross members 40C has a groove height made higher toward ends 40a on the outer side of the vehicle than the battery pack 20. The ground-side cross member 40C has the ends 40a on the outer side of the vehicle connected to the lower surfaces (side wall portions 11b on lower sides of side sill inners 11) of the side sills.

Moreover, in the automotive body lower structure 1C, the cross-sectional heights of the side sills 10 can be reduced by increasing the groove heights of the ends 40a on the outer side of the vehicle of the ground-side cross members 40C. The weight of the automotive body can be reduced without deteriorating crashworthiness for side impact.

In addition, the pair of right and left ground-side cross members 40C are separately connected to both the ends 20a in the automotive body width direction on the lower surface side of the battery pack 20, which can prevent a significant increase in automotive body weight caused by installing the ground-side cross members 40C. The ends 40b on the inner side of the vehicle of the ground-side cross members 40C connected to both the ends 20a on the lower surface side of the battery pack 20 can have a range (length) of at least 50 mm or more in the automotive body width direction.

The automotive body lower structure 1C of the battery electric vehicle according to the fourth embodiment can reduce a load input to the battery pack 20 at the time of side impact, and inhibit deformation of the battery pack 20. This can manufacture a safe battery electric vehicle that protects a battery even at the time of side impact. Moreover, the automotive body lower structure 1C according to the fourth embodiment can inhibit a weight increase caused by installing the ground-side cross members 40C, and reduce the cross-sectional heights of the side sills 10. The automotive body lower structure 1C can reduce the weight of the automotive body without deteriorating crashworthiness for side impact.

The ground-side cross member 40 preferably has, at an end 40a on the outer side of the vehicle, a groove height 1.2 times or more and three times or less higher than the groove height at an end 40b on the inner side of the vehicle, and more preferably twice or less (see FIG. 8(b)). FIG. 8(b) (i) is a cross-sectional view at an end 40b (position of A in FIG. 8(a)) on the inner side of the vehicle. FIG. 8(b) (ii) is a cross-sectional view at an end 40a (position of B in FIG. 8(a)) on the outer side of the vehicle.

Furthermore, a groove height of less than 1.2 times at the end 40a on the outer side of the vehicle cannot sufficiently reduce the weight by reducing the cross-sectional height of a side sill 10. A groove height exceeding three times at the end 40a on the outer side of the vehicle easily causes buckling at a portion having a groove height made higher on the outer side of the vehicle than the battery pack 20, and greatly changes the shape. A load input at the time of side impact causes bending, which prevents the side sill 10 from being sufficiently crushed. Moreover, the side sill has a reduced cross-sectional height, which further deteriorates crashworthiness for side impact.

### [Example 1]

Specific analysis was performed to verify functions and effects of the automotive body lower structure of the battery electric vehicle according to the first embodiment of the present invention. The result will be described below.

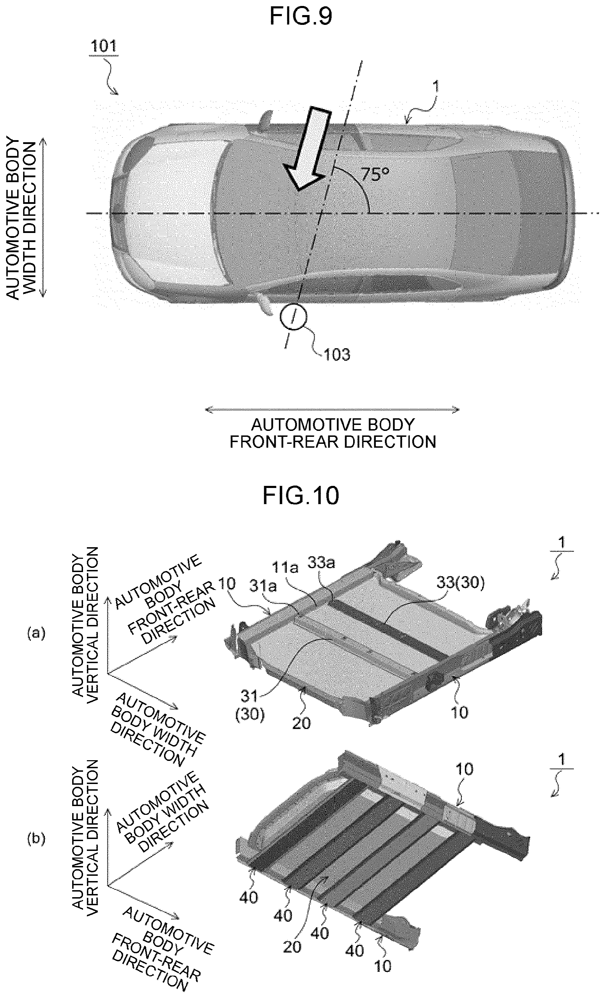

In Example 1, impact analysis was performed in a side impact pole test in which a vehicle 101 including the automotive body lower structure 1 in FIG. 1 in the above-described first embodiment is made to collide with a pole 103 on a side surface of the vehicle 101 from the outer side of the vehicle in the automotive body width direction as illustrated in FIG. 9 (Invention Example 1).

As described in the first embodiment, the automotive body lower structure 1 includes the side sills 10, the battery pack 20, floor cross members 30, and ground-side cross members 40.

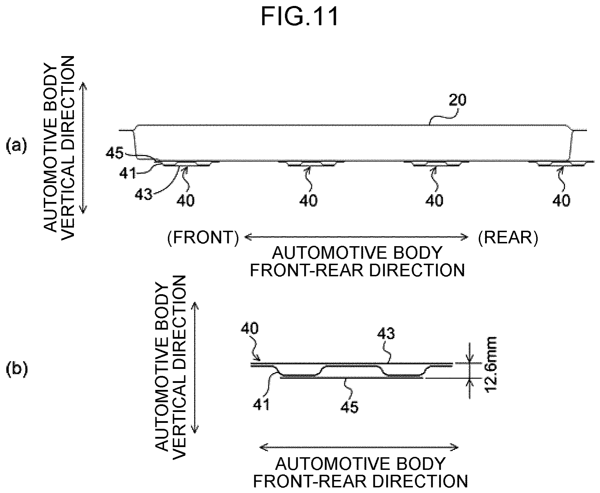

Two floor cross members 30 were provided for fastening a front seat (not illustrated), and installed on an automotive body front side (floor cross member 31) and an automotive body rear side (floor cross member 33) at an interval in the automotive body front-rear direction as illustrated in FIGS. 10(a) and 11.

Furthermore, the floor cross member 31 on the automotive body front side and the floor cross member 33 on the automotive body rear side had groove shapes extending in the automotive body width direction with ends 31a and 33a being closed. As illustrated in FIG. 10(a), the ends 31a and 33a abutted on a side surface (top portion 11a of side sill inner 11) of a side sill 10.

As illustrated in FIG. 11, each of the ground-side cross members 40 includes the continuous hat-shaped cross section member 41, the upper metal sheet 43, and the lower metal sheet 45. In the example, each of the ground-side cross members 40 had a groove height of 12.6 mm (FIG. 11(b)). Then, as illustrated in FIGS. 10(b) and 11(a), four ground-side cross members 40 were installed at equal intervals in the automotive body front-rear direction on the lower surface side of the battery pack 20.

In the automotive body lower structure 1 according to Example 1, the side sills 10 and the floor cross members 30 were formed of steel sheets having a tensile strength of 980 MPa class. The ground-side cross members 40 were formed of steel sheets having a tensile strength of 980 MPa class.

In Example 1, impact analysis was performed in which the vehicle 101 accelerated to 32 km/h was made to collide with the pole 103 on the side surface of the vehicle 101 at an impact angle of 75° (FIG. 9).

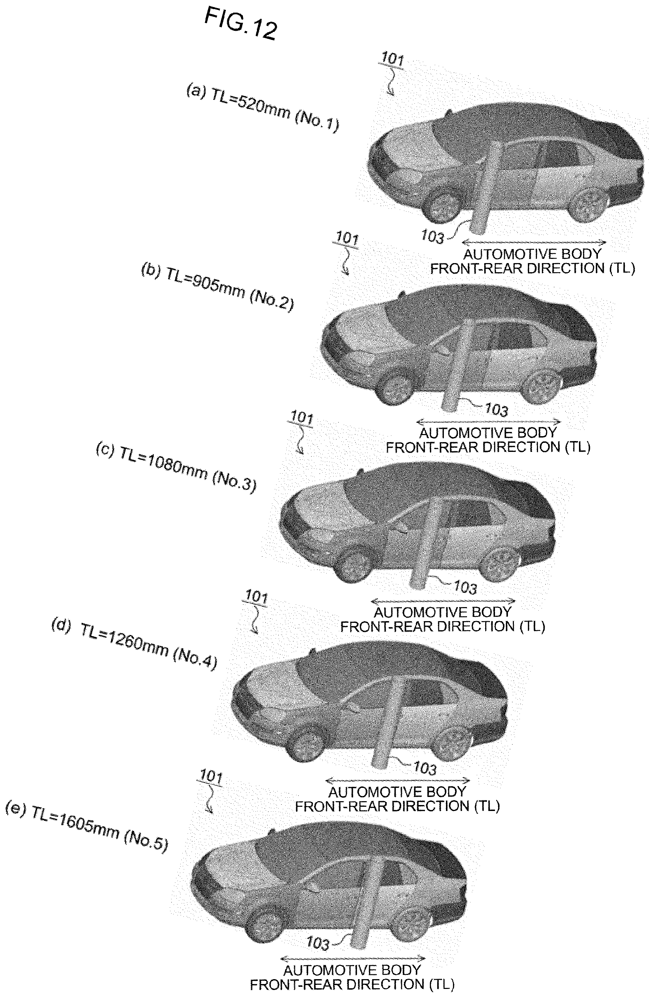

In a battery electric vehicle, an anywhere requirement is strictly required to protect the battery pack 20 regardless of a position of impact of the pole 103 against a side surface of the vehicle 101. Therefore, in the example, as illustrated in FIG. 12, five locations in the automotive body front-rear direction (TL) were set as positions of impact of the pole 103 (No. 1: TL = 520 mm, No. 2: TL = 905 mm, No. 3: TL = 1080 mm, No. 4: TL = 1260 mm, and No. 5: TL = 1605 mm).

Then, impact analysis of pole side impact was performed for each of impact positions of Nos. 1 to 5 to evaluate a load input to the side of the battery pack 20 (input load to battery pack) and a deformation amount of the battery pack 20 (deformation amount of battery pack).

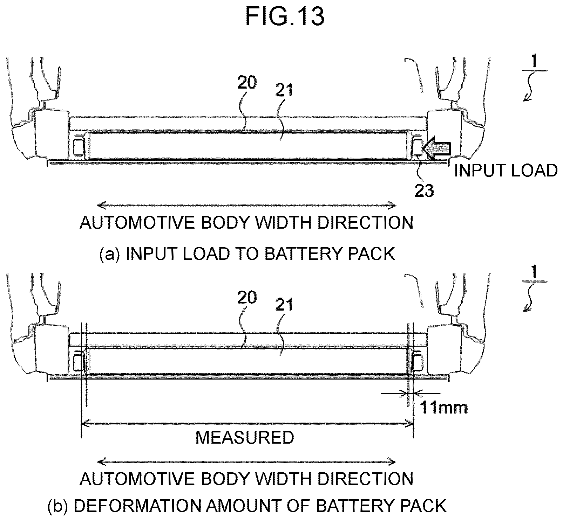

As illustrated in FIG. 13(a), reaction force generated in a battery frame 23 by contact of a side sill inner 11 (contact reaction force) in an impact process was determined as the input load to the battery pack.

In contrast, as illustrated in FIG. 13(b), lengths in the automotive body width direction were measured before and after deformation of the battery pack 20 at each of 12 locations in the automotive body front-rear direction. The difference between the lengths before and after the deformation was determined and set as a deformation amount of the battery pack.

The minimum distance between the inner surface of the battery pack 20 and the battery cell 21 before the deformation was 11 mm in consideration of the plate thickness of the battery pack 20. Therefore, in the example, a deformation amount of the battery pack of less than 10 mm was targeted as a condition in which the battery pack 20 does not come into contact with the battery cell 21 at the time of side impact.

Furthermore, in Example 1, the automotive body lower structure 1B (third embodiment of present invention) in FIG. 5 was used in Reference Example 1. As in Invention Example 1, impact analysis of pole side impact of the vehicle 101 in FIG. 9 was performed to evaluate an input load to the battery pack and a deformation amount of the battery pack.

As illustrated in FIG. 5, the automotive body lower structure 1B according to Reference Example 1 (third embodiment of present invention) includes the side sills 10, the battery pack 20, the floor cross member 30, and ground-side cross members 40B.

As illustrated in FIG. 5, a side sill 10 of the automotive body lower structure 1B has a shape similar to that of a side sill 10 of the automotive body lower structure 1 according to Invention Example 1 except that the side sill 10 of the automotive body lower structure 1B has a lower cross-sectional height in an automotive body vertical direction than the side sill 10 of the automotive body lower structure 1 according to Invention Example 1. Furthermore, the battery pack 20 and the floor cross member 30 have the same shapes as those in the invention example.

As illustrated in FIG. 5, the ground-side cross members 40B of the automotive body lower structure 1B are installed on the lower surface side of the battery pack 20, and have a groove shape extending in the automotive body width direction. Then, the ground-side cross members 40B have a groove height made higher toward the ends 40a on the outer side of the vehicle than the battery pack 20. The ground-side cross members 40B have the ends 40a connected to the lower surfaces (side wall portions 11b on lower sides of side sill inners 11) of the side sills 10.

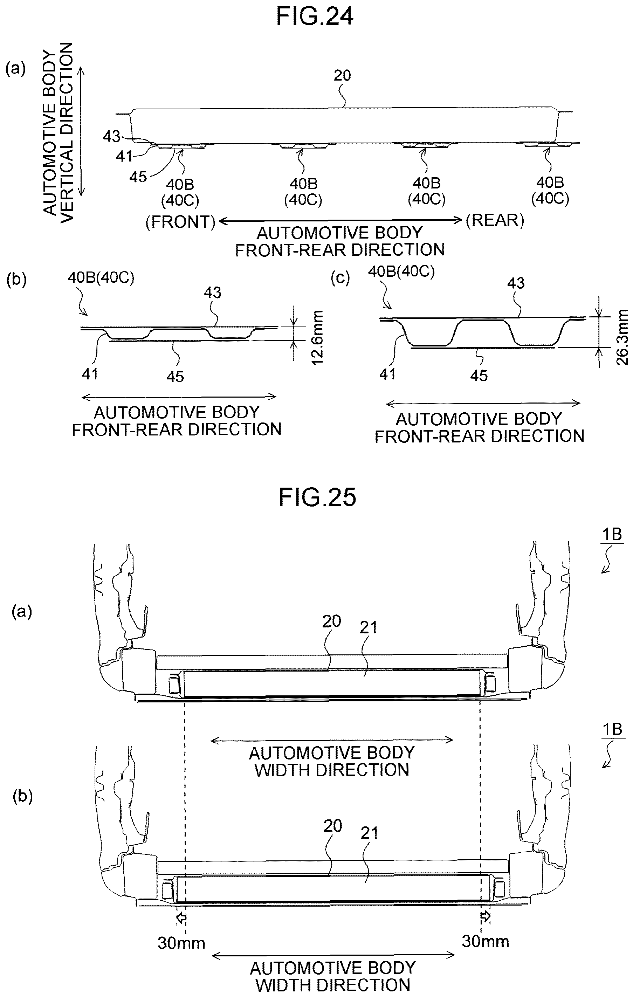

As illustrated in FIG. 24(a), in the automotive body lower structure 1B, as in the automotive body lower structure 1 according to Invention Example 1, four ground-side cross members 40 are arranged at intervals in the automotive body front-rear direction on the lower surface side of the battery pack 20.

Then, as illustrated in FIG. 24, each of the ground-side cross members 40B of the automotive body lower structure 1B according to Reference Example 1 (third embodiment of present invention) includes the continuous hat-shaped cross section member 41, the upper metal sheet 43, and the lower metal sheet 45. Moreover, each of the ground-side cross member 40B of the automotive body lower structure 1B according to Reference Example 1 (third embodiment of present invention) has a groove height of 12.6 mm at the center in the automotive body width direction, and has a groove height of 26.3 mm at an end in the automotive body width direction.

In Reference Example 1, an input load to the battery pack and a deformation amount of the battery pack are determined as in Invention Example 1 (FIG. 13).

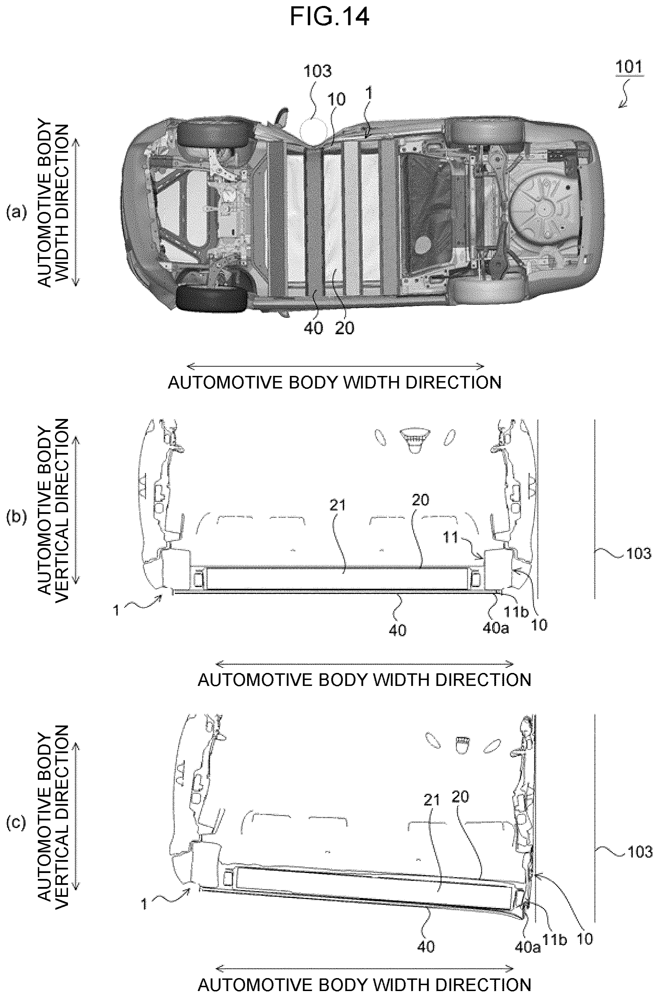

FIG. 14 illustrates states before and after deformation in a side impact process in a case where the pole 103 is made to collide with the vehicle 101 including the automotive body lower structure 1 according to Invention Example 1 at a position (FIG. 12(b)) in the automotive body front-rear direction TL = 905 mm on a side surface of the vehicle 101 (before deformation: FIG. 14(b), after deformation: FIG. 14(c)). FIGS. 14(b) and 14(c) are cross-sectional views of the automotive body lower structure 1 at the impact position (TL = 905 mm) of the pole 103.

As illustrated in FIG. 14(c), a side sill 10 is completely crushed, which proves that impact energy has been sufficiently absorbed. In particular, after a side sill outer 13 is crushed, a lower portion of the side sill 10 is sufficiently crushed by an end 40a of a ground-side cross member 40 connected to the lower surface (side wall portion 11b of side sill inner 11) of the side sill 10. Then, as illustrated in FIG. 14(c), there is a gap between the battery pack 20 and the battery cell 21 even after the side sill 10 is completely crushed. This proves that the battery cell 21 is protected without being damaged by deformation of the battery pack 20.

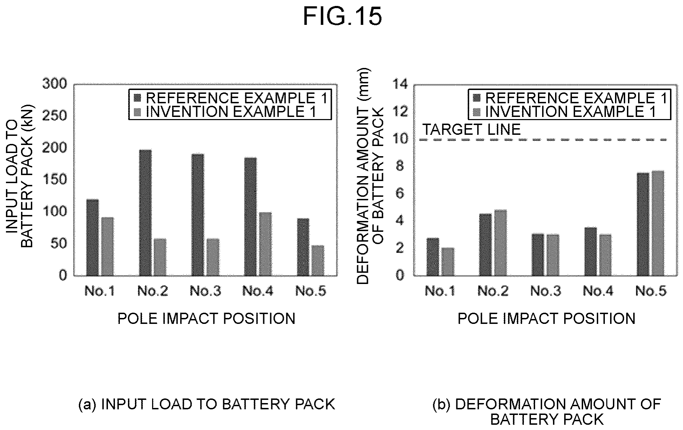

FIG. 15 illustrates evaluation results of an input load to the battery pack and a deformation amount of the battery pack determined for each position in the automotive body front-rear direction where the pole 103 collides in Invention Example 1 and Reference Example 1.

As illustrated in FIG. 15(a), a value of an input load to the battery pack is lower in Invention Example 1, and is 100 kN or less at most. In Invention Example 1, the ground-side cross member 40 having a substantially linear groove shape along the automotive body width direction was installed.

In contrast, as illustrated in FIG. 15(b), there is no difference in the deformation amount of the battery pack between in Invention Example 1 and in Reference Example 1. Both are less than 10 mm, which has been set as a target.

In the automotive body lower structure 1B according to Reference Example 1, the cross-sectional height of the side sill 10 is reduced by increasing the groove height of an end of the ground-side cross member 40B. The weight of the automotive body lower structure 1B according to Reference Example 1 is reduced by 1.9 kg as compared to that of the automotive body lower structure 1 according to Invention Example 1. In contrast, the automotive body lower structure 1 according to Invention Example 1 includes the ground-side cross member 40 having a substantially linear groove shape. A result was thus obtained in which an input load to the battery pack was reduced while the automotive body weight was increased as compared to those in Reference Example 1.

An anywhere requirement in pole side impact of a battery electric vehicle is an extremely difficult condition. According to the automotive body lower structure of the present invention, however, it has been demonstrated that the battery pack has a deformation amount of less than 10 mm regardless of a pole impact position, the target is achieved, and the battery can be protected.

### [Example 2]

Specific analysis was performed to verify functions and effects of the automotive body lower structure 1A according to the second embodiment of the present invention. The result will be described below.

In Example 2, impact analysis was performed in a side impact pole test in which a vehicle 101 including the automotive body lower structure 1A in FIG. 3 in the above-described second embodiment is made to collide with a pole 103 on a side surface of the vehicle 101 from the outer side of the vehicle in the automotive body width direction as illustrated in FIG. 9 (Invention Example 2).

As described in the second embodiment, the automotive body lower structure 1A includes the side sills 10, the battery pack 20, floor cross members 30, and ground-side cross members 40A.

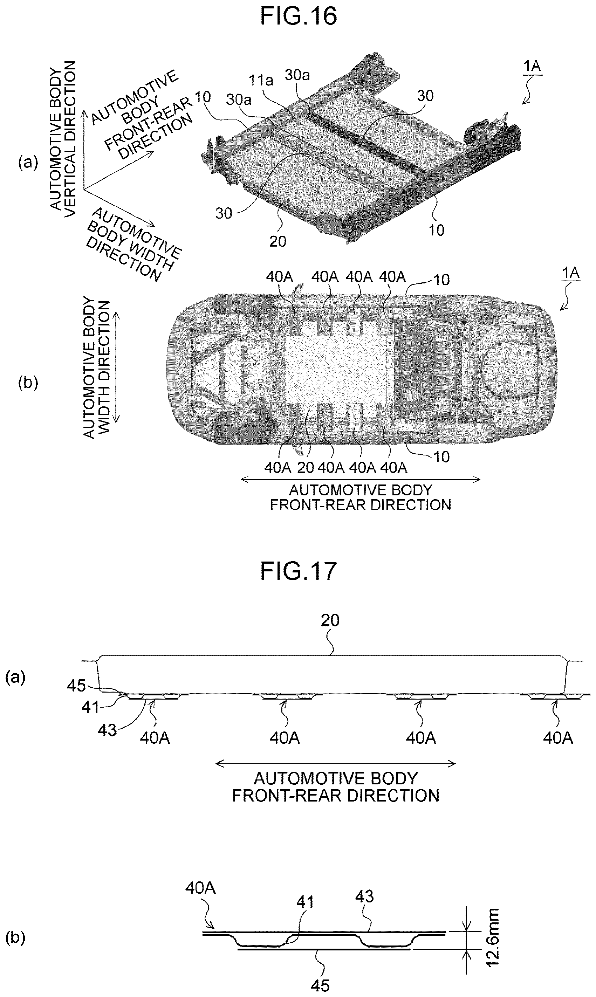

Two floor cross members 30 were provided for fastening a front seat (not illustrated), and installed at an interval in the automotive body front-rear direction as illustrated in FIG. 16(a). Both of the two floor cross members 30 had a groove shape extending in the automotive body width direction with both the ends 30a being closed, and abutted on the side surfaces (top portions 11a of side sill inners 11) of the right and left side sills 10.

As illustrated in FIG. 16(b), a pair of right and left ground-side cross members 40A are installed so as to extend from both the ends 20a in the automotive body width direction on the lower surface of the battery pack 20 toward the outer side of the vehicle, and have groove shapes extending in the automotive body width direction. In the automotive body lower structure 1A, four sets of ground-side cross members 40A were installed at intervals in the automotive body front-rear direction.

As illustrated in FIG. 17, each of the ground-side cross members 40A includes the continuous hat-shaped cross section member 41, the upper metal sheet 43, and the lower metal sheet 45. Then, each of the ground-side cross members 40A has a linear groove shape, and has a cross-sectional shape orthogonal to the automotive body width direction substantially constant along the automotive body width direction. Each of the ground-side cross member 40A had a groove height of 12.6 mm.

In the automotive body lower structure 1A according to Example 2, the side sills 10 and the floor cross members 30 were formed of steel sheets having a tensile strength of 980 MPa class. The ground-side cross members 40A were formed of steel sheets having a tensile strength of 980 MPa class.

In Example 2, impact analysis was performed in a side impact pole test in which the vehicle 101 accelerated to 32 km/h was made to collide with the pole 103 on the side surface of the vehicle 101 at an impact angle of 75° (FIG. 9).

In a battery electric vehicle, an anywhere requirement is strictly required to protect the battery pack 20 regardless of a position of impact of the pole 103 against a side surface of the vehicle 101. Therefore, in the example, as illustrated in FIG. 12, five locations of Nos. 1 to 5 in the automotive body front-rear direction (TL) were set as positions of impact of the pole 103 (No.1: TL = 520 mm, No. 2: TL = 905 mm, No. 3: TL = 1080 mm, No. 4: TL = 1260 mm, and No. 5: TL = 1605 mm). Then, impact analysis of pole side impact was performed for each of impact positions of Nos. 1 to 5 to evaluate a load input to the side of the battery pack 20 (input load to battery pack) and a deformation amount of the battery pack 20 (deformation amount of battery pack).

Reaction force generated in a battery frame 23 by contact of a side sill inner 11 (contact reaction force) in an impact process was determined as the input load to the battery pack as in Example 1 (see FIG. 13(a)).

Batteries mounted on battery electric vehicles and the like are required to conform to United Nations Regulation "UN ECE R100-0.2. Part. II". A crushing test (shock test) is specified as a test item related to evaluation of safety of a battery at the time of vehicle impact. In the crushing test, a test target device (battery pack) is crushed with force of 100 kN or more and 105 kN or less, a start period of less than three minutes, and a holding period of 100 ms or more and 10 s or less to evaluate whether there are crushing and electrolyte liquid leakage of a battery and signs of fire and explosion (see Internet <URL:https://www.mlit.go.jp/jidosha/un/UN_R100.pdf> [searched on June 21, 2023]). Therefore, in Example 2, a target value of an input load to the battery pack was set to be 105 kN or less, which was a load to be input to a battery in the crushing test of United Nations Regulation "UN ECE R100-0.2. Part. II".

In contrast, as in Example 1 (see FIG. 13(b)), lengths in the automotive body width direction were measured before and after deformation of the battery pack 20 at each of 12 locations in the automotive body front-rear direction. The difference between the lengths before and after the deformation was determined and set as a deformation amount of the battery pack. The minimum distance between the inner surface of the battery pack 20 and the battery cell 21 before the deformation was 11 mm in consideration of the plate thickness of the battery pack 20. Therefore, in the example, a deformation amount of the battery pack of less than 10 mm was targeted as a condition in which the battery pack 20 does not come into contact with the battery cell 21 at the time of pole side impact.

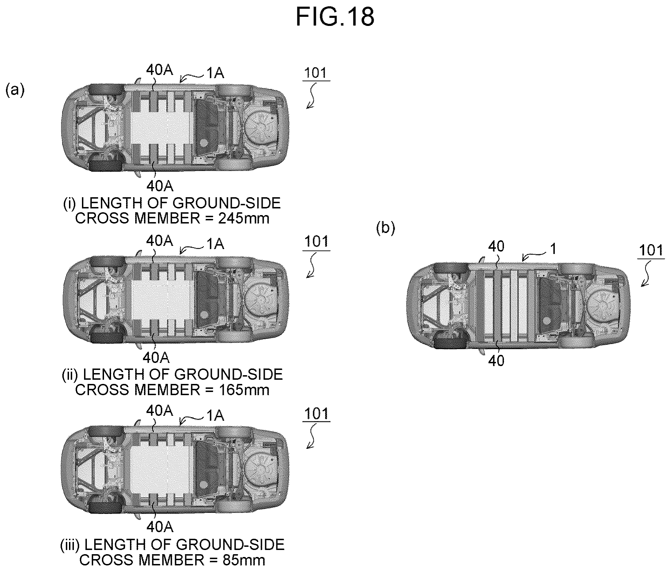

In Example 2, as illustrated in FIGS. 18(a) (i) to (iii), impact analysis was performed for three cases of automotive body lower structures 1A each including a ground-side cross member 40A having a length of 245 mm, 165 mm, or 85 mm. An influence of the length of the ground-side cross member 40A was considered.

Moreover, in Example 2, as in the case of the automotive body lower structure 1A according to Invention Example 2, impact analysis of pole side impact was performed by using, as Reference Example 2 (first embodiment of present invention), the automotive body lower structure 1 that includes the ground-side cross members 40 extending in the automotive body width direction and having both the ends 40a connected to the right and left side sills 10 as illustrated in FIG. 18(b).

As illustrated in FIG. 2(a), the ground-side cross member 40 in Reference Example 2 (first embodiment of present invention) is installed on the lower surface side of the battery pack 20, and has a groove shape extending in the automotive body width direction. Then, the ground-side cross member 40 in FIG. 2(a) has a linear groove shape and a cross-sectional shape orthogonal to the automotive body width direction substantially constant along the automotive body width direction. The ground-side cross member 40 has ends 40a connected to the lower surfaces (side wall portions 11b on lower sides of side sill inners 11) of the side sills 10.

Moreover, as illustrated in FIG. 2, similarly to the ground-side cross member 40A in FIG. 4 of Invention Example 2, the ground-side cross member 40 of Reference Example 2 (first embodiment of present invention) includes the continuous hat-shaped cross section member 41, the upper metal sheet 43, and the lower metal sheet 45. Then, as illustrated in FIG. 2, the ground-side cross member 40 of Reference Example 2 (first embodiment of present invention) has a groove height of 12.6 mm as in Invention Example 2 (FIG. 17(b)). Furthermore, in the automotive body lower structure 1 according to Reference Example 2 (first embodiment of present invention), four ground-side cross members 40 are installed at equal intervals in the automotive body front-rear direction.

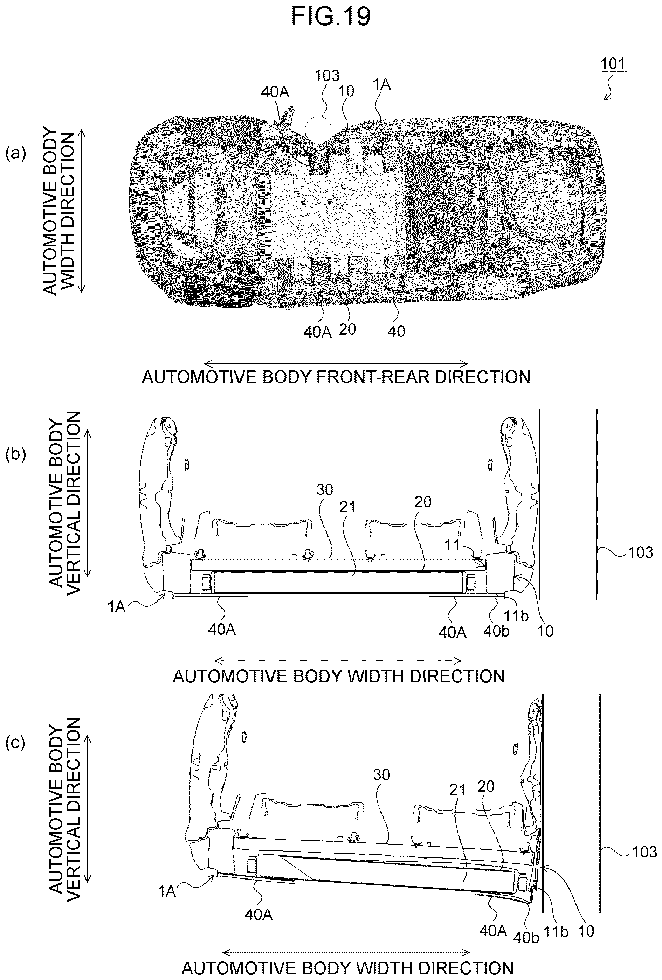

FIG. 19 illustrates states before and after deformation of the automotive body lower structure 1A in a pole side impact process in which the pole 103 was made to collide with the vehicle 101 including the ground-side cross members 40A according to Invention Example 2 having a length of 165 mm at a position (FIG. 12(b)) in the automotive body front-rear direction TL = 905 mm on a side surface of the vehicle 101 (before deformation: FIG. 19(b), after deformation: FIG. 19(c)). FIGS. 19(b) and (c) are cross-sectional views of the automotive body lower structure 1A at the impact position (TL = 905 mm) of the pole 103.

As illustrated in FIG. 19(c), crushing does not occur although an end 30a on the outer side of the vehicle of the floor cross member 30 is deformed and bending deformation occurs at an end 40b on the outer side of the vehicle of the ground-side cross member 40A. In contrast, a side sill 10 is completely crushed, which proves that impact energy has been sufficiently absorbed. In particular, after a side sill outer 13 was crushed, a lower portion of the side sill 10 has been sufficiently crushed by the end 40b on the outer side of the vehicle of the ground-side cross member 40A connected to the lower surface (side wall portion 11b of side sill inner 11) of the side sill 10. Then, as illustrated in FIG. 19(c), there is a gap between the battery pack 20 and the battery cell 21 even after the side sill 10 was completely crushed. This proves that the battery cell 21 is protected without being damaged by deformation of the battery pack 20.

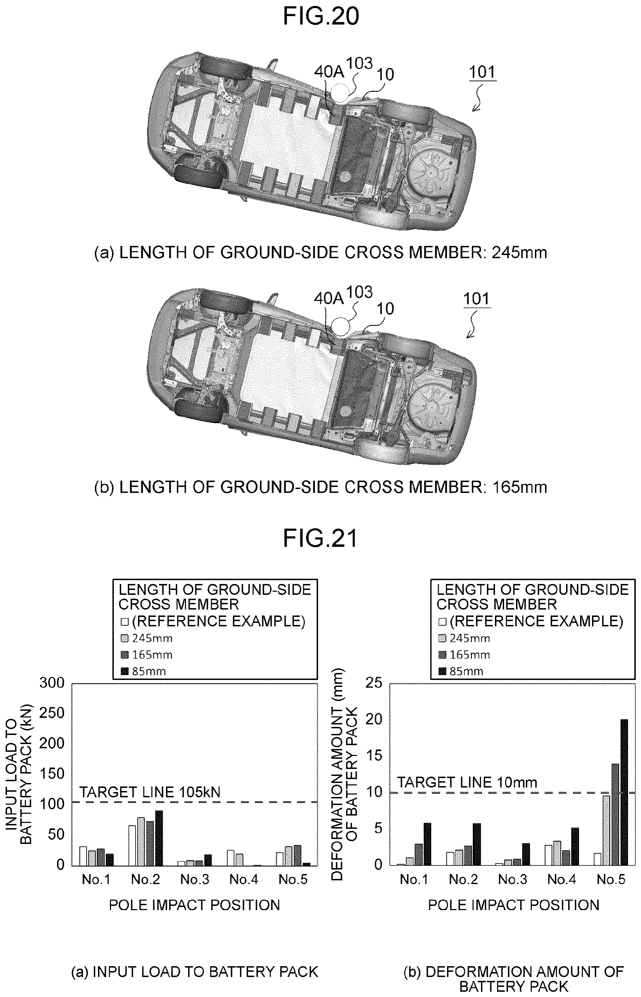

FIG. 20 illustrates states of deformations of the automotive body lower structure 1 determined by impact analysis in which a pole is made to collide with the vehicle 101 on a side surface of the vehicle 101 at a position (FIG. 12(e)) in the automotive body front-rear direction TL = 1605 mm. The vehicle 101 has a ground-side cross member 40A having a length of 245 mm or 165 mm.

As illustrated in FIG. 20(b), the side sill 10 was deformed toward the inner side of the vehicle more greatly in the case where each of the ground-side cross members 40A had a length of 165 mm than in the case where each of the ground-side cross member 40A had a length of 245 mm.

FIG. 21 illustrates evaluation results of an input load to the battery pack and a deformation amount of the battery pack determined for each position in the automotive body front-rear direction where the pole 103 collides. Input loads to the battery pack did not greatly differ depending on the lengths of the ground-side cross members 40A. All the input loads are 105 kN or less, which was set as a target.

A deformation amount of the battery pack increased as the length of a ground-side cross member 40A decreased. Deformation amounts of the battery pack in the cases of lengths of 85 mm and 165 mm exceeded 10 mm, which was set as a target, at an impact position (in FIG. 12(e), TL = 1605 mm) of No. 5. Results similar to that in Reference Example 2 (first embodiment of present invention) were, however, obtained in cases of other impact positions (Nos. 1 to 4) and a ground-side cross member 40 having a length of 245 mm. The deformation amount of the battery pack was less than 10 mm, which was set as a target.

An anywhere requirement in pole side impact of a battery electric vehicle is an extremely difficult condition. According to the automotive body lower structure 1A of the second embodiment of the present invention, however, it has been demonstrated that, if the length of the ground-side cross member 40A is appropriately selected (in example, at least 245 mm or more), a target of a deformation amount of the battery pack is achieved regardless of a pole impact position and the battery can be protected.

### [Example 3]

Specific analysis was performed to verify functions and effects of the automotive body lower structure 1B according to the third embodiment of the present invention. The result will be described below.

In Example 3, impact analysis was performed in a side impact pole test in which a vehicle 101 including the automotive body lower structure 1B (FIG. 5) in the above-described third embodiment is made to collide with a pole 103 on a side surface of the vehicle 101 from the outer side of the vehicle in the automotive body width direction as illustrated in FIG. 9 (Invention Example 3).

As described in the third embodiment, the automotive body lower structure 1B includes the side sills 10, the battery pack 20, floor cross members 30, and ground-side cross members 40B.

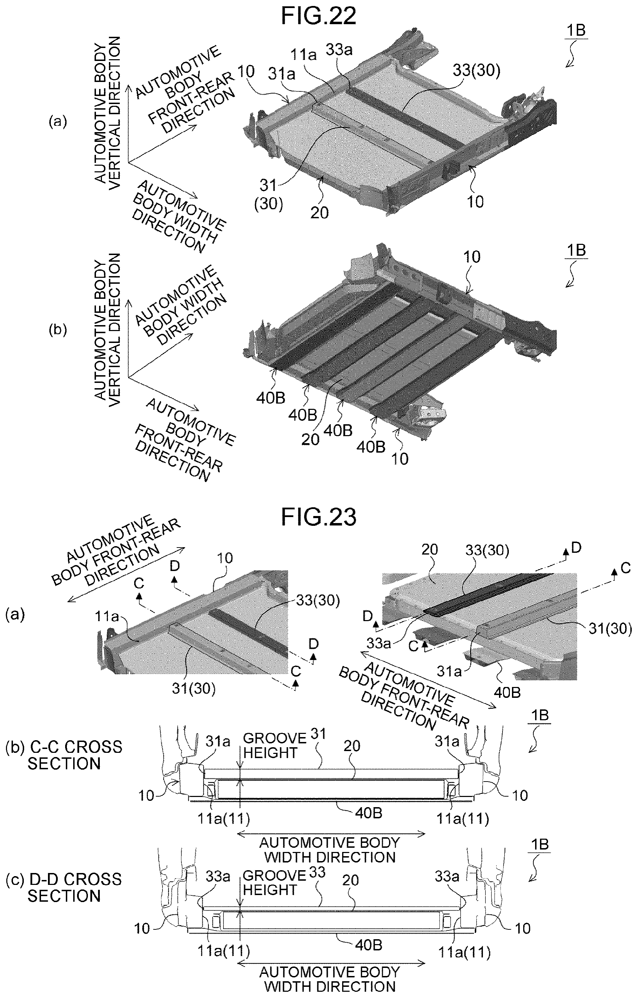

Two floor cross members 30 were provided for fastening a front seat (not illustrated), and installed on an automotive body front side (floor cross member 31) and an automotive body rear side (floor cross member 33) at an interval in the automotive body front-rear direction as illustrated in FIGS. 22(a) and 23.

As illustrated in FIGS. 23(b) and (c), the floor cross member 31 on the automotive body front side and the floor cross member 33 on the automotive body rear side had different groove heights. Then, as illustrated in FIG. 23(a), the floor cross member 31 and the floor cross member 33 had a groove shape extending in the automotive body width direction with both ends 31a and 33a being closed (note that right figure in FIG. 23(a) illustrates state in which side sill is removed, for convenience). Moreover, as illustrated in FIGS. 23(b) and (c), both the ends 31a and 33a abutted on the side surfaces (top portions 11a of side sill inners 11) of the right and left side sills 10.

As illustrated in FIG. 24, each of the ground-side cross members 40B includes the continuous hat-shaped cross section member 41, the upper metal sheet 43, and the lower metal sheet 45. Then, as illustrated in FIGS. 24(b) and (c), each of the ground-side cross members 40B had a groove height made higher toward the ends 40a on the outer side of the vehicle than the battery pack 20. Each of the ground-side cross members 40B had a groove height of 12.6 mm at the center in the automotive body width direction, and had a groove height of 26.3 mm at ends in the automotive body width direction.

Then, as illustrated in FIGS. 22(b) and 24(a), four ground-side cross members 40B were installed at equal intervals in the automotive body front-rear direction on the lower surface side of the battery pack 20.

In the automotive body lower structure 1B according to Example 3, the side sills 10 and the floor cross members 30 were formed of steel sheets having a tensile strength of 980 MPa class. The ground-side cross members 40B were formed of steel sheets having a tensile strength of 980 MPa class.

In Example 3, impact analysis was performed in a side impact pole test in which the vehicle 101 accelerated to 32 km/h was made to collide with the pole 103 on the side surface of the vehicle 101 at an impact angle of 75° (FIG. 9).

In a battery electric vehicle, an anywhere requirement is strictly required to protect the battery pack 20 regardless of a position of impact of the pole 103 against a side surface of the vehicle 101. Therefore, in the example, as illustrated in FIG. 12, five locations of Nos. 1 to 5 in the automotive body front-rear direction (TL) were set as positions of impact of the pole 103 (No.1: TL = 520 mm, No. 2: TL = 905 mm, No. 3: TL = 1080 mm, No. 4: TL = 1260 mm, and No. 5: TL = 1605 mm). Then, impact analysis of pole side impact was performed for each of impact positions of Nos. 1 to 5 to evaluate a load input to the side of the battery pack 20 (input load to battery pack) and a deformation amount of the battery pack 20 (deformation amount of battery pack).

Reaction force generated in a battery frame 23 by contact of a side sill inner 11 (contact reaction force) in an impact process was determined as the input load to the battery pack as in Example 1 (see FIG. 13(a)).

In contrast, as in Example 1 (see FIG. 13(b)), lengths in the automotive body width direction were measured before and after deformation of the battery pack 20 at each of 12 locations in the automotive body front-rear direction. The difference between the lengths before and after the deformation was determined and set as a deformation amount of the battery pack.

The minimum distance between the inner surface of the battery pack 20 and the battery cell 21 before the deformation was 11 mm in consideration of the plate thickness of the battery pack 20. Therefore, in Example 3, a deformation amount of the battery pack of less than 10 mm was targeted as a condition in which the battery pack 20 does not come into contact with the battery cell 21 at the time of pole side impact.

Moreover, in Example 3, a deformation amount of the battery pack and an input load to the battery pack were also evaluated under a condition in which the battery pack is more easily damaged (Invention Example 4). In Invention Example 4, as illustrated in FIG. 25, the widths of the battery pack 20 and the battery cell 21 were increased by 60 mm (30 mm on one side) toward the outer side of the vehicles in the automotive body width direction. The distances between the side sills 10 and the battery pack 20 were narrowed. The weight was increased by 14.4 kg by increasing the widths of the battery pack 20 and the battery cell 21 by 60 mm.

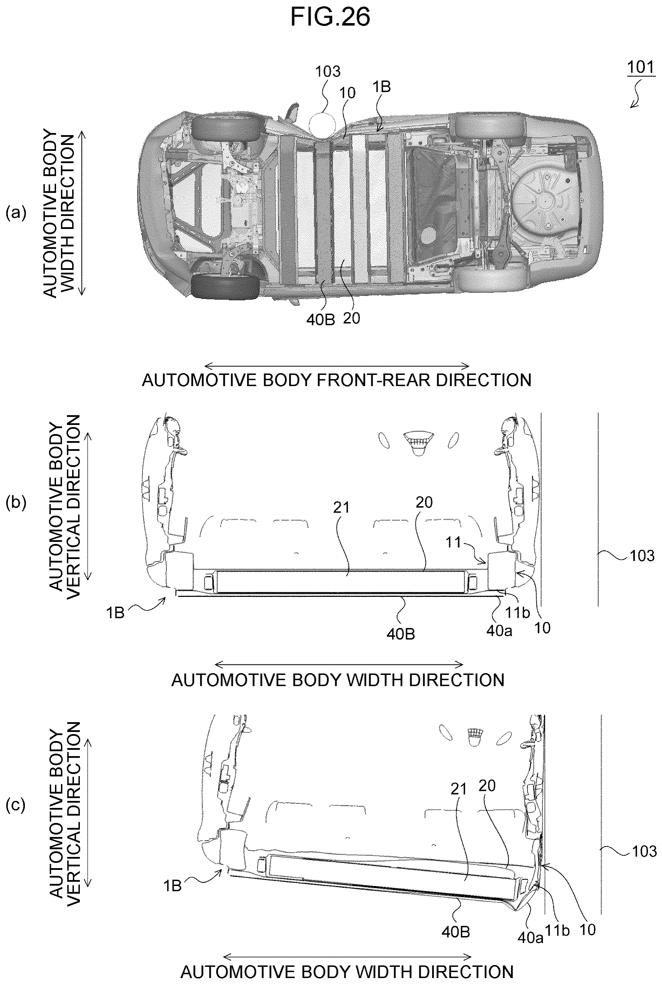

FIG. 26 illustrates states before and after deformation of the automotive body lower structure 1 in a pole side impact process in which the pole 103 was made to collide with the vehicle 101 mounted with the battery cell 21 having a reference width at a position (FIG. 12(b)) in the automotive body front-rear direction TL = 905 mm on a side surface of the vehicle 101 (before deformation: FIG. 26(b), after deformation: FIG. 26(c)). FIGS. 26(b) and 26(c) are cross-sectional views of the automotive body lower structure 1 at the impact position (TL = 905 mm) of the pole 103.

As illustrated in FIG. 26(c), a side sill 10 is completely crushed, which proves that impact energy has been sufficiently absorbed. In particular, after a side sill outer 13 was crushed, a lower portion of the side sill 10 is sufficiently crushed by an end 40a of a ground-side cross member 40B connected to the lower surface (side wall portion 11b of side sill inner 11) of the side sill 10. Then, as illustrated in FIG. 26(c), there is a gap between the battery pack 20 and the battery cell 21 even after the side sill 10 was completely crushed. This proves that the battery cell 21 is protected without being damaged by deformation of the battery pack 20.

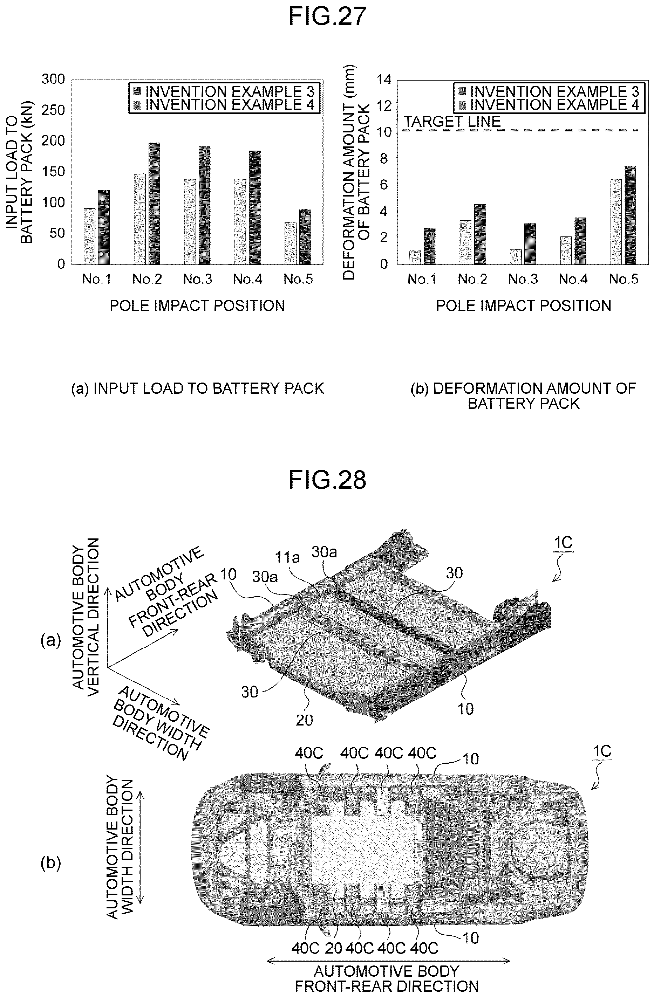

FIG. 27 illustrates evaluation results of an input load to the battery pack and a deformation amount of the battery determined for each position (Nos. 1 to 5 in FIG. 12) in the automotive body front-rear direction where the pole 103 collides.

An input load to the battery pack was increased in Invention Example 4 in which the battery cell 21 was enlarged by 60 mm in the automotive body width direction at any pole impact position. The input load to the battery pack was 200 kN or less at most. Furthermore, deformation amounts of the battery pack were less than 10 mm, which was set as a target, in both the case (Invention Example 3) where the battery cell had the reference width and the case (Invention Example 4) where the battery cell was enlarged by 60 mm.

An anywhere requirement in pole side impact of a battery electric vehicle is an extremely difficult condition. According to the automotive body lower structure 1B of the third embodiment of the present invention, however, it has been demonstrated that the battery pack has a target deformation amount regardless of a pole impact position and the battery can be protected.

### [Example 4]

Specific analysis was performed to verify functions and effects of the automotive body lower structure 1C according to the fourth embodiment of the present invention. The result will be described below.

In Example 4, impact analysis was performed in a side impact pole test in which a vehicle 101 including the automotive body lower structure 1C in FIG. 7 in the above-described fourth embodiment is made to collide with a pole 103 on a side surface of the vehicle 101 from the outer side of the vehicle in the automotive body width direction as illustrated in FIG. 9 (Invention Example 5).

As described in the fourth embodiment, the automotive body lower structure 1C includes the side sills 10, the battery pack 20, floor cross members 30, and ground-side cross members 40C.

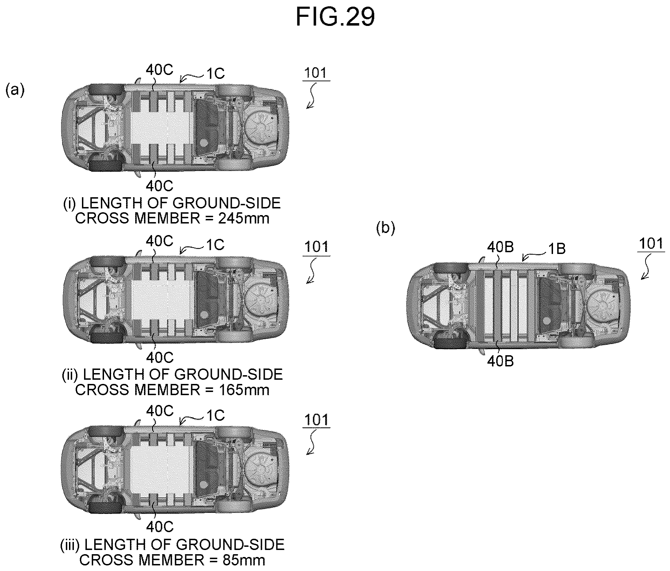

Two floor cross members 30 were provided for fastening a front seat (not illustrated), and installed at an interval in the automotive body front-rear direction as illustrated in FIG. 28(a). Both of the two floor cross members 30 had a groove shape extending in the automotive body width direction with both the ends 30a being closed, and abutted on the side surfaces (top portions 11a of side sill inners 11) of the right and left side sills 10.

As illustrated in FIG. 28(a), a pair of right and left ground-side cross members 40C of the automotive body lower structure 1C are installed so as to extend from both the ends 20a in the automotive body width direction on the lower surface of the battery pack 20 toward the outer side of the vehicle, and have groove shapes extending in the automotive body width direction. In the automotive body lower structure 1C, four sets of ground-side cross members 40C were installed at intervals in the automotive body front-rear direction.

As illustrated in FIG. 24 (as in third embodiment of Example 3), each of the ground-side cross members 40C includes the continuous hat-shaped cross section member 41, the upper metal sheet 43, and the lower metal sheet 45. Then, as illustrated in FIGS. 24(b) and (c), each of the ground-side cross members 40C had a groove height made higher toward the ends 40a on the outer side of the vehicle than the battery pack 20. Each of the ground-side cross members 40C had a groove height of 12.6 mm at ends 40b on the inner side of the vehicle, and had a groove height of 26.3 mm at ends 40a on the outer side of the vehicle.

In the automotive body lower structure 1C according to Example 4, the side sills 10 and the floor cross members 30 were formed of steel sheets having a tensile strength of 980 MPa class. The ground-side cross members 40C were formed of steel sheets having a tensile strength of 980 MPa class.

In Example 4, impact analysis was performed in a side impact pole test in which the vehicle 101 accelerated to 32 km/h was made to collide with the pole 103 on the side surface of the vehicle 101 at an impact angle of 75° (FIG. 9).

In a battery electric vehicle, an anywhere requirement is strictly required to protect the battery pack 20 regardless of a position of impact of the pole 103 against a side surface of the vehicle 101. Therefore, in the example, as illustrated in FIG. 12, five locations of Nos. 1 to 5 in the automotive body front-rear direction (TL) were set as positions of impact of the pole 103 (No.1: TL = 520 mm, No. 2: TL = 905 mm, No. 3: TL = 1080 mm, No. 4: TL = 1260 mm, and No. 5: TL = 1605 mm). Then, impact analysis of pole side impact was performed for each of impact positions of Nos. 1 to 5 to evaluate a load input to the side of the battery pack 20 (input load to battery pack) and a deformation amount of the battery pack 20 (deformation amount of battery pack).

Reaction force generated in a battery frame 23 by contact of a side sill inner 11 (contact reaction force) in an impact process was determined as the input load to the battery pack as in Example 1 (see FIG. 13(a)).

In contrast, as in Example 1 (see FIG. 13(b)), lengths in the automotive body width direction were measured before and after deformation of the battery pack 20 at each of 12 locations in the automotive body front-rear direction. The difference between the lengths before and after the deformation was determined and set as a deformation amount of the battery pack.

The minimum distance between the inner surface of the battery pack 20 and the battery cell 21 before the deformation was 11 mm in consideration of the plate thickness of the battery pack 20. Therefore, in Example 4, a deformation amount of the battery pack of less than 10 mm was targeted as a condition in which the battery pack 20 does not come into contact with the battery cell 21 at the time of pole side impact.

In Example 4, as illustrated in FIGS. 29(a) (i) to (iii), impact analysis was performed for three cases of automotive body lower structures 1 each including a ground-side cross member 40C having a length of 245 mm, 165 mm, or 85 mm. An influence of the length of the ground-side cross member 40C was considered.

Moreover, in Example 4, as in the case of the automotive body lower structure 1C according to Invention Example 5, impact analysis of pole side impact was performed by using, as Reference Example 3 (third embodiment of present invention), the automotive body lower structure 1B that includes the ground-side cross members 40B extending in the automotive body width direction and having both the ends 40a connected to the right and left side sills 10 as illustrated in FIG. 29(b).

As illustrated in FIG. 6(a), the ground-side cross member 40B in Reference Example 3 (third embodiment of present invention) is installed on the lower surface side of the battery pack 20, and has a groove shape extending in the automotive body width direction. Then, the ground-side cross member 40B in Reference Example 3 (third embodiment of present invention) has a groove height made higher toward ends 40a on the outer side of the vehicle than the battery pack 20. The ground-side cross member 40B has the ends 40a connected to the lower surfaces (side wall portions 11b on lower sides of side sill inners 11) of the side sills 10.

Moreover, similarly to the ground-side cross member 40C of Invention Example 5, the ground-side cross member 40B of Reference Example 3 (third embodiment of present invention) includes the continuous hat-shaped cross section member 41, the upper metal sheet 43, and the lower metal sheet 45 as illustrated in FIGS. 6(b) and (c). Then, the ground-side cross member 40 has a groove height of 12.6 mm at the center in the automotive body width direction, and has a groove height of 26.3 mm at an end in the automotive body width direction. Furthermore, in the automotive body lower structure 1B according to Reference Example 3 (third embodiment of present invention), four ground-side cross members 40B are installed at equal intervals in the automotive body front-rear direction.

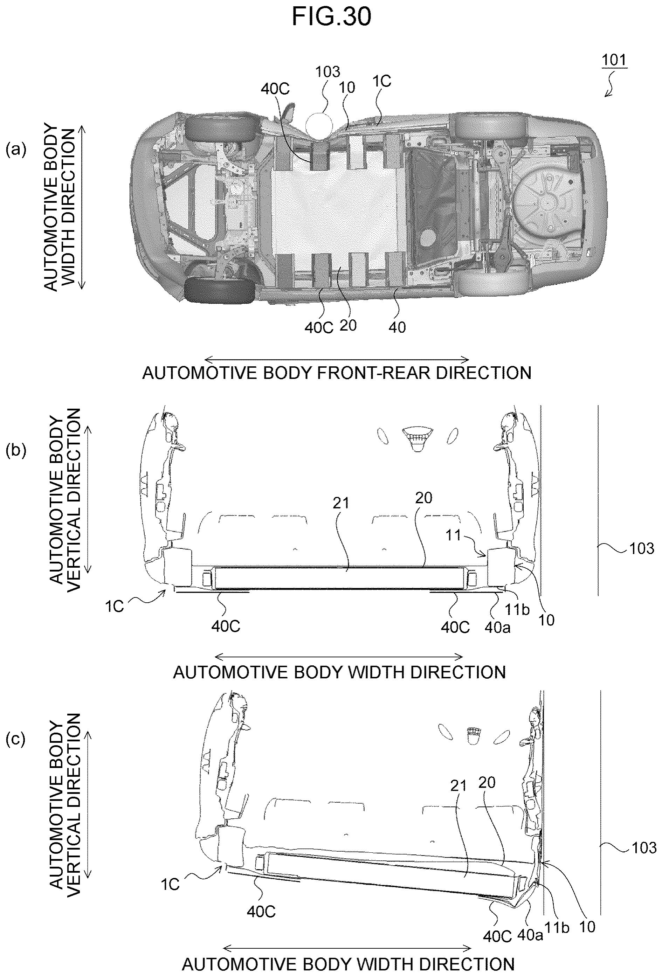

FIG. 30 illustrates states before and after deformation of the automotive body lower structure 1 in a pole side impact process in which the pole 103 was made to collide with the vehicle 101 including the ground-side cross members 40C having a length of 165 mm at a position (FIG. 12(b)) in the automotive body front-rear direction TL = 905 mm on a side surface of the vehicle 101 (before deformation: FIG. 30(b), after deformation: FIG. 30(c)). FIGS. 30(b) and 30(c) are cross-sectional views of the automotive body lower structure 1 at the impact position (TL = 905 mm) of the pole 103.

As illustrated in FIG. 30(c), a side sill 10 is completely crushed, which proves that impact energy has been sufficiently absorbed. In particular, after a side sill outer 13 was crushed, a lower portion of the side sill 10 has been sufficiently crushed by the end 40a on the outer side of the vehicle of the ground-side cross member 40C connected to the lower surface (side wall portion 11b of side sill inner 11) of the side sill 10. Then, as illustrated in FIG. 30(c), there is a gap between the battery pack 20 and the battery cell 21 even after the side sill 10 was completely crushed. This proves that the battery cell 21 is protected without being damaged by deformation of the battery pack 20.

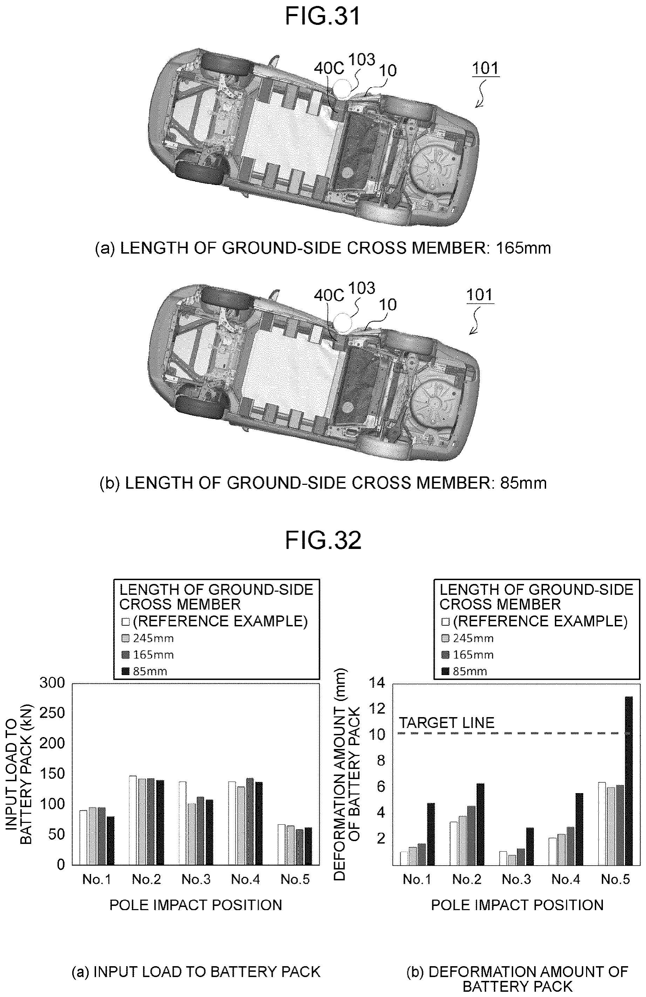

FIG. 31 illustrates states of deformations of the automotive body lower structure 1 determined by impact analysis in which a pole is made to collide with the vehicle 101 on a side surface of the vehicle 101 at a position (FIG. 12(b)) in the automotive body front-rear direction TL = 905 mm. The vehicle 101 has a ground-side cross member 40C having a length of 165 mm or 85 mm.

As illustrated in FIG. 31(b), the side sill 10 is deformed toward the inner side of the vehicle more greatly in the case where each of the ground-side cross members 40C has a length of 85 mm than in the case where each of the ground-side cross member 40C has a length of 165 mm.

FIG. 32 illustrates evaluation results of an input load to the battery pack and a deformation amount of the battery pack determined for each position in the automotive body front-rear direction where the pole 103 collides. Input loads to the battery pack does not greatly differ depending on the lengths of the ground-side cross members 40C. The input loads are 105 kN or less at most.

A deformation amount of the battery pack increases as the length of a ground-side cross member 40C decreases. A deformation amount of the battery pack in the cases of a length of 85 mm exceeds 10 mm, which is a target, at an impact position (in FIG. 12(e), TL = 1605 mm) of No. 5. Results similar to those in the reference examples are, however, obtained in cases of other impact positions (Nos. 1 to 4) and ground-side cross members 40C having lengths of 245 mm and 165 mm. The deformation amount of the battery pack is less than 10 mm, which has been set as a target.

An anywhere requirement in pole side impact of a battery electric vehicle is an extremely difficult condition. According to the automotive body lower structure 1C of the fourth embodiment of the present invention, however, it has been demonstrated that the battery pack has a target deformation amount regardless of a pole impact position and the battery can be protected.

### Industrial Applicability

According to the present invention, it is possible to provide an automotive body lower structure of a battery electric vehicle capable of reducing a load input to a battery pack and inhibiting deformation without deteriorating weight efficiency at the time of side impact of the battery electric vehicle.

### Reference Signs List

1, 1A, 1B, 1C AUTOMOTIVE BODY LOWER STRUCTURE
10 SIDE SILL
11 SIDE SILL INNER
11a TOP PORTION
11b SIDE WALL PORTION
11c FLANGE PORTION
13 SIDE SILL OUTER
13c FLANGE PORTION
20 BATTERY PACK
20a END
21 BATTERY CELL
23 BATTERY FRAME
30 FLOOR CROSS MEMBER
30a END
31 FLOOR CROSS MEMBER
31a END
33 FLOOR CROSS MEMBER
33a END
40, 40A, 40B, 40C GROUND-SIDE CROSS MEMBER
40a END (END ON OUTER SIDE OF THE VEHICLE)
40b END (END ON INNER SIDE OF THE VEHICLE)
41 CONTINUOUS HAT-SHAPED CROSS SECTION MEMBER
41a TOP PORTION
43 UPPER METAL SHEET
45 LOWER METAL SHEET
51 AUTOMOTIVE BODY LOWER STRUCTURE
60 SIDE SILL
70 GROUND-SIDE CROSS MEMBER
70a END
71 CONTINUOUS HAT-SHAPED CROSS SECTION MEMBER
73 UPPER METAL SHEET
75 LOWER METAL SHEET
101 VEHICLE
103 POLE

## Claims

1. An automotive body lower structure of a battery electric vehicle, comprising:
a pair of right and left side sills disposed on an outer side of the vehicle in an automotive body width direction and extending in an automotive body front-rear direction;
a battery pack disposed between the pair of right and left side sills;
a floor cross member installed on an upper surface side of the battery pack and extending in the automotive body width direction; and
a ground-side cross member installed on a lower surface side of the battery pack and having a groove shape extending in the automotive body width direction,
wherein the floor cross member has a linear groove shape opened toward the automotive body lower side with both ends being closed, and both the ends abut on side surfaces of the right and left side sills, and
the ground-side cross member has the groove shape that is linear and a cross-sectional shape orthogonal to the automotive body width direction substantially constant along the automotive body width direction, and has an end connected to a lower surface of each of the side sills.

2. An automotive body lower structure of a battery electric vehicle, comprising:
a pair of right and left side sills disposed on an outer side of the vehicle in an automotive body width direction and extending in an automotive body front-rear direction;
a battery pack disposed between the pair of right and left side sills;
a floor cross member installed on an upper surface side of the battery pack and extending in the automotive body width direction; and
a pair of right and left ground-side cross members installed on both ends in the automotive body width direction on a lower surface of the battery pack and having a groove shape extending from both the ends toward the outer side of the vehicle,
wherein the floor cross member has a linear groove shape opened toward an automotive body lower side with both ends being closed, and both the ends abut on side surfaces of the right and left side sills, and
each of the ground-side cross members has the groove shape that is linear and a cross-sectional shape orthogonal to the automotive body width direction substantially constant along the automotive body width direction, has an end, on an inner side of the vehicle, connected to a lower surface of the battery pack, and has an end, on the outer side of the vehicle, connected to a lower surface of each of the side sills.

3. An automotive body lower structure of a battery electric vehicle, comprising:
a pair of right and left side sills disposed on an outer side of the vehicle in an automotive body width direction and extending in an automotive body front-rear direction;
a battery pack disposed between the pair of right and left side sills;
a floor cross member installed on an upper surface side of the battery pack and extending in the automotive body width direction; and
a ground-side cross member installed on a lower surface side of the battery pack and having a groove shape extending in the automotive body width direction,
wherein the floor cross member has a linear groove shape opened toward the automotive body lower side with both ends being closed, and both the ends abut on side surfaces of the right and left side sills, and
the ground-side cross member has a groove height made higher toward an end on the outer side of the vehicle than the battery pack, and has the end connected to a lower surface of each of the side sills.

4. An automotive body lower structure of a battery electric vehicle, comprising:
a pair of right and left side sills disposed on an outer side of the vehicle in an automotive body width direction and extending in an automotive body front-rear direction;
a battery pack disposed between the pair of right and left side sills;
a floor cross member installed on an upper surface side of the battery pack and extending in the automotive body width direction; and
a pair of right and left ground-side cross members installed on both ends in the automotive body width direction on a lower surface of the battery pack and having a groove shape extending from both the ends toward the outer side of the vehicle,
wherein the floor cross member has a linear groove shape opened toward an automotive body lower side with both ends being closed, and both the ends abut on side surfaces of the right and left side sills, and
each of the ground-side cross members has an end, on an inner side of the vehicle, connected to a lower surface of the battery pack, has a groove height increased toward an end on an outer side of the vehicle than the battery pack, and has an end, on the outer side of the vehicle, connected to a lower surface of each of the side sills.

5. The automotive body lower structure of a battery electric vehicle, according to any one of claims 1 to 4, wherein the ground-side cross member includes:
a continuous hat-shaped cross section member having at least three continuous hat-shaped cross sections in a cross section orthogonal to an automotive body width direction;
an upper metal sheet that covers an upper surface of the continuous hat-shaped cross section member; and
a lower metal sheet that covers a lower surface of the continuous hat-shaped cross section member.

6. The automotive body lower structure of a battery electric vehicle, according to any one of claims 1 to 5, wherein a closed shape of the floor cross member is formed by welding or bonding an end plate at both the ends of the groove shape.

7. The automotive body lower structure of a battery electric vehicle, according to any one of claims 1 to 6, wherein the floor cross member has a cross-sectional shape orthogonal to the automotive body width direction substantially constant along the automotive body width direction.

8. The automotive body lower structure of a battery electric vehicle, according to any one of claims 1 to 7, wherein
each of the side sills and the floor cross member are formed of a steel sheet having a tensile strength of 980 MPa class or more, and
the ground-side cross member is made of a steel sheet having a tensile strength of 590 MPa class or more.
